(19) **Europäisches Patentamt**
**European Patent Office**
**Office européen des brevets**

(11) **EP 1 356 656 B1**

(12) **FASCICULE DE BREVET EUROPEEN**

(45) Date de publication et mention
de la délivrance du brevet:
**07.04.2010 Bulletin 2010/14**

(51) Int Cl.:
*H04L 29/08* (2006.01)     *G06K 7/00* (2006.01)
*H04L 29/06* (2006.01)

(21) Numéro de dépôt: **01982520.7**

(86) Numéro de dépôt international:
**PCT/FR2001/003207**

(22) Date de dépôt: **17.10.2001**

(87) Numéro de publication internationale:
**WO 2002/033866 (25.04.2002 Gazette 2002/17)**

(54) **SYSTEME DE SUIVI ET DE CONTROLE D'EXECUTION D'APPLIQUETTES A PARTIR D'UNE PLURALITE DE FLUX LOGIQUES D'ECHANGE MULTIPLE DE COUPLES DE COMMANDE/REPONSE**

EIN SYSTEM ZUR VERFOLGUNG UND UEBERWACHUNG VON APPLETS VON MEHREREN LOGIKSTRÖME FUR DIE VERMITTLUNG VON MEHRFACHEN BEFEHL/ANTWORT-PAAREN

A SYSTEM FOR TRACKING AND MONITORING EXECUTION OF APPLETS WITH THE HELP OF A PLURALITY OF MULTIPLE EXCHANGE LOGIC FLOW OF COMMAND/RESPONSE PAIRS

(84) Etats contractants désignés:
**AT BE CH CY DE DK ES FI FR GB GR IE IT LI LU MC NL PT SE TR**

(30) Priorité: **20.10.2000 FR 0013476**

(43) Date de publication de la demande:
**29.10.2003 Bulletin 2003/44**

(73) Titulaire: **Trusted Logic**
**78000 Versailles (FR)**

(72) Inventeurs:
• **FREY, Alexandre**
**F-75018 Paris (FR)**
• **MESNIL, Cédric**
**F-94130 Nogent sur Marne (FR)**

(74) Mandataire: **Loisel, Bertrand**
**Cabinet Plasseraud**
**52 rue de la Victoire**
**75440 Paris Cedex 09 (FR)**

(56) Documents cités:
**EP-A- 0 992 958     WO-A-98/19237**
**FR-A- 2 791 159**

• **ISO: "7816 part 4: Interindustry command for interchange" ISO/IEC, [en ligne] 26 novembre 1998 (1998-11-26), XP002169265 Extrait de l'Internet: <URL:www.geocities.com/ ResearchTriangle/La b/15/8/iso/8164.htm> [extrait le 2001-06-08] cité dans la demande**

**EP 1 356 656 B1**

**Description**

La présente invention concerne un processus de transmission de flux logiques d'échange multiple de couples de commande/réponse sur un canal physique unique d'échange, entre un émetteur/récepteur maître et un émetteur/récepteur esclave, et aux applications d'un tel processus, notamment à la mise en oeuvre d'un système de suivi et de contrôle d'exécution, ou débogage, d'appliquettes implantées sur une carte à microprocesseur.

Les protocoles d'échange de données ou d'informations entre émetteurs/récepteurs maître et esclave présentent à l'heure actuelle un intérêt très important, dans la mesure où ces protocoles permettent d'assurer un échange de données, et donc d'informations, fiable et parfaitement stable entre un élément maître, doté de capacités de calcul et de traitement importantes, et un élément esclave, dont les capacités de calcul et de traitement, liées à des capacités de mémorisation, sont à l'heure actuelle beaucoup plus faibles.

C'est le cas en particulier pour les systèmes informatiques constitués par les couples lecteurs de cartes (CAD) - carte à microprocesseur, carte à puce, encore appelées systèmes embarqués, pour lesquels la norme ISO 7816 définit deux protocoles de communication, entre carte à puce et lecteur CAD.

D'une manière plus spécifique, ces deux protocoles sont définis par les paramètres T=0 et T=1 et correspondent chacun à un protocole *"half-duplex"*, un seul des deux interlocuteurs, le lecteur de carte, respectivement la carte à puce, pouvant à un instant donné transmettre des données à l'autre interlocuteur.

Suite à l'insertion de la carte dans le lecteur de carte, l'alimentation de la carte est effectuée par le lecteur de carte et l'échange de données intervient ainsi sur un canal physique unique, entre l'émetteur/récepteur maître, le lecteur CAD, et l'émetteur/récepteur esclave, la carte à puce. L'unité d'information transmise est appelée APDU pour *Application Protocol Data Unit.*

Dans les protocoles précités, connus de l'art antérieur, on distingue les APDU de commande, ou C-APDU, et les APDU de réponse ou R-APDU.

Une session d'échange d'informations consiste en un ou plusieurs échanges d'APDU. Ainsi, un échange d'APDU consiste en un échange d'un couple commande/réponse, C-APDU/R-APDU, toujours initié par l'élément émetteur/récepteur maître, lequel envoie une C-APDU à laquelle l'émetteur/récepteur esclave répond par une R-APDU. Pendant la durée de l'échange, l'élément maître reste bloqué, en attente de la réponse, les échanges de couples de commande/réponse impliquant donc le transfert successif de l'initiative de transmission, la main, entre l'émetteur/récepteur maître, respectivement l'émetteur/ récepteur esclave, et réciproquement.

Dans le pire des cas, la seule initiative, distincte de ce transfert successif, qu'est susceptible de prendre l'émetteur/récepteur maître, le lecteur CAD, est d'interrompre la session d'échange entière, en coupant l'alimentation électrique de l'émetteur/récepteur esclave, la carte à puce.

Les progrès constants des processus physiques de gravure des circuits intégrés, et, en conséquence, des capacités de calcul et de traitement et de mémorisation dans un volume ou surface de silicium donné ont toutefois provoqué, de manière récente, l'apparition d'émetteurs/ récepteurs esclaves, aux fonctionnalités multiples. C'est en particulier le cas des cartes à puce multi-applications. Certaines cartes à puce peuvent, par exemple, intégrer plusieurs applications avec lesquelles le lecteur CAD peut chercher à communiquer indépendamment. En effet, alors que les lecteurs CAD ne présentent pas de limitations de capacité rédhibitoires, plusieurs applications pouvant être implantées dans ce type de lecteur CAD, tels que par exemple, les distributeurs automatiques de billets installés dans les banques ou les terminaux de téléphonie mobile GSM, le système constitué par un émetteur/récepteur esclave, carte à puce multi-applications, se trouve alors confronté à l'échange multiple d'informations, par couples commande/réponse, sur un canal physique unique, entre applications sensiblement indépendantes.

Certaines cartes à puce peuvent en effet intégrer plusieurs systèmes de fichiers, plusieurs appliquettes ou services installés sur ces dernières. Les cartes GSM, notamment, servent, à la fois, pour assurer l'authentification de l'abonné, et, comme unité portable, système embarqué, pour l'exécution d'appliquettes (encore désignées *Applets* en langage anglo-saxon).

Dans ce but, la section 5.5 de la norme ISO 7816-4 définit la notion de canal logique. Ces canaux logiques permettent de découpler les sessions d'échanges APDU à destination des différents interlocuteurs, appliquettes ou services, présents sur la carte à puce. Le processus normalisé proposé est très simple, une carte à puce pouvant gérer jusqu'à quatre canaux logiques numérotés de 0 à 3. Ces canaux logiques peuvent être ouverts respectivement fermés par la commande standard *MANAGE CHANNEL,* telle que définie à la section 6.16 de la norme ISO 7816-4. Ensuite, le numéro du canal logique de destination d'une commande C-APDU est codé dans les deux bits de poids faible du code de classe (CLA) de l'ADPU.

Ainsi, les différents canaux logiques définis par la norme ISO 7816-4 sont donc découplés logiquement, mais les échanges d'APDU sur le canal physique unique d'échange restent bloquants, tant pour le lecteur CAD et ses différentes applications que pour les différentes appliquettes ou services qui peuvent être exécutées sur la carte à puce, le conflit susceptible d'être engendré par la présence multiple simultanée de couples commande/réponse relatifs à des canaux logiques distincts n'étant pas résolu de manière spécifique. Confer en particulier les dispositions du paragraphe

2

**EP 1 356 656 B1**

4, section 5.5.1 de la norme ISO 7816-4, selon lequel le lancement de couples commande/réponse doit être terminé avant le lancement du couple commande/réponse suivant, les commandes et les réponses ne devant pas être imbriquées sur plusieurs canaux logiques, un seul canal logique devant être actif entre la réception d'une commande et l'envoi de la réponse correspondante.

A titre d'exemple le document EP 0 992 958 décrit un processus de communication entre une carte à puce et un appareil de métrologie selon le protocole ISO 7816 et comportant les limitations précitées.

La présente invention a pour objet de remédier aux inconvénients des processus d'échange de données par couples de commande/réponse de l'art antérieur entre émetteur/récepteur maître et émetteur/récepteur esclave grâce à la suppression de la limitation imposée aux canaux logiques multiples.

Un autre objet de la présente invention est l'élaboration d'un processus de transmission d'une pluralité de flux logique d'échange multiple de couples commande/réponse sur un canal physique unique d'échange, entre un émetteur/récepteur maître et un émetteur/ récepteur esclave, grâce à la mise en oeuvre de canaux logiques concurrents, chaque canal logique concurrent permettant d'échanger indépendamment des couples de commande/réponse, plusieurs couples de commande/réponse pouvant toutefois être actifs simultanément sur les différents canaux logiques concurrents ouverts.

En particulier, un autre objet de la présente invention est l'élaboration d'un processus de transmission d'une pluralité de flux logiques d'échange multiple de couples de commande/réponse sur un canal physique unique d'échange, entre un émetteur/récepteur maître et un émetteur/récepteur esclave, dans lequel l'émetteur/ récepteur maître, tel qu'un lecteur CAD, est en mesure d'initier un échange de couples de commande/réponse, APDU, sur un autre canal logique concurrent, pendant qu'un échange de couples de commande/réponse est déjà en cours sur un canal concurrent déjà actif, différentes applications connectées à l'émetteur/récepteur maître, le lecteur CAD, utilisant au moins une application gérée par l'émetteur/récepteur esclave, appliquette ou service implanté dans la carte à puce, pouvant en conséquence être exécutées indépendamment les unes des autres, en l'absence de tout risque de conflit d'exécution.

Réciproquement, un autre objet de la présente invention est un processus de transmission d'une pluralité de flux logiques d'échange multiple de couples commande/réponse sur un canal physique unique d'échange, entre un émetteur/récepteur maître et un émetteur/ récepteur esclave, dans lequel des couples de commande/réponse différents peuvent être échangés sur des canaux logiques concurrents distincts reliés à différentes applications gérées par l'émetteur/récepteur esclave, applications telles que les différentes appliquettes ou services implantés sur une carte à puce multi-applications, ces applications, grâce à la mise en oeuvre du processus selon la présente invention s'exécutant ainsi simultanément et indépendamment.

Un autre objet de la présente invention est également un processus de transmission d'une pluralité de flux logiques d'échange multiple de couples de commande/réponse sur un canal physique unique d'échange, entre un émetteur/récepteur maître et un émetteur/ récepteur esclave, dans lequel chacun des canaux logiques concurrents est fermé à l'initiative du seul émetteur/récepteur maître, y compris dans le cas d'un échange de couples de commande/réponse en cours.

Un autre objet de la présente invention est également un processus de transmission d'une pluralité de flux logiques d'échange multiple de couples de commande/réponse sur un canal physique unique d'échange, entre un émetteur/récepteur maître et un émetteur/ récepteur esclave échangeant des couples de commande/réponse sur des canaux logiques de base, des couples de commande/réponse pouvant également être échangés sur des canaux logiques concurrents entre cet émetteur/récepteur maître et cet émetteur/récepteur esclave, les couples de commande/réponse constituant des flux logiques de base acheminés par les canaux logiques de base, respectivement des flux logiques concurrents, acheminés par les canaux logiques concurrents, ces flux logiques cohabitant pour bénéficier du processus d'échange de couples de commande/réponse sur le canal physique unique d'échange, en l'absence de tout conflit.

Un autre objet de la présente invention est enfin, lorsque l'émetteur/récepteur maître est constitué par un lecteur CAD et l'émetteur/récepteur esclave est constitué par une carte à puce, un processus de transmission d'une pluralité de flux logiques d'échange multiple de couples de commande/réponse totalement compatible avec les spécifications de la norme ISO 7816.

Le processus de transmission d'une pluralité de flux logiques d'échange multiple de couples de commande/réponse sur un canal physique unique d'échange entre un émetteur/récepteur maître et un émetteur/ récepteur esclave, selon l'invention, est relatif à des flux logiques comportant au moins un flux logique de base, initié par l'émetteur/récepteur maître, soumis à la même relation maître/esclave que le canal physique unique d'échange, l'émetteur/récepteur maître respectivement esclave permettant l'exécution d'au moins une application logicielle.

Il est remarquable en ce qu'il consiste à engendrer dans l'un des flux logiques de base, pris comme flux logique de référence, un ensemble de flux logiques concurrents, chaque flux logique concurrent étant formé par des paquets élémentaires successifs segmentant les couples de commande/réponse. Les paquets élémentaires successifs formant l'ensemble des flux logiques concurrents sont transmis sur le flux logique de référence, deux flux logiques concurrents de cet ensemble permettant la transmission indépendante et sensiblement simultanée de couples de commande/réponse distincts.

3

L'initiation et la poursuite de tout échange de couples de commande/réponse est réalisée à l'initiative de l'émetteur/récepteur maître à partir de commandes spécifiques transmises sur ce flux logique de référence et la segmentation en paquets élémentaires successifs est réalisée à l'initiative de réponses spécifiques transmises en réponse à ces commandes spécifiques sur ce flux de référence. Ceci permet, d'une part, l'échange de couples de commande/réponse indépendants et sensiblement simultanés entre au moins un couple d'applications de l'émetteur/récepteur maître, respectivement esclave, et, d'autre part, l'échange de couples de commande/réponse prioritaires sur un flux logique de base différent du flux logique pris comme flux logique de référence sur le canal physique d'échange.

Le processus de transmission d'une pluralité de flux logiques d'échange multiple de couples de commande/réponse sur un canal physique unique d'échange entre un émetteur/récepteur maître, respectivement esclave, et un système de suivi et de contrôle d'exécution d'appliquettes implantées sur un système informatique, tel qu'un système informatique embarqué, mettant en oeuvre un tel processus, selon la présente invention, seront mieux compris à la lecture de la description et à l'observation des dessins ci-après dans lesquels :

- la figure la représente, à titre illustratif, un organigramme de mise en oeuvre des étapes essentielles du processus, objet de la présente invention, permettant l'exécution du processus de transmission d'une pluralité de flux logiques d'échange multiple de couples de commande/réponse sur un canal physique unique d'échange entre un émetteur/récepteur maître et un émetteur/récepteur esclave en présence d'un flux logique de base unique ;

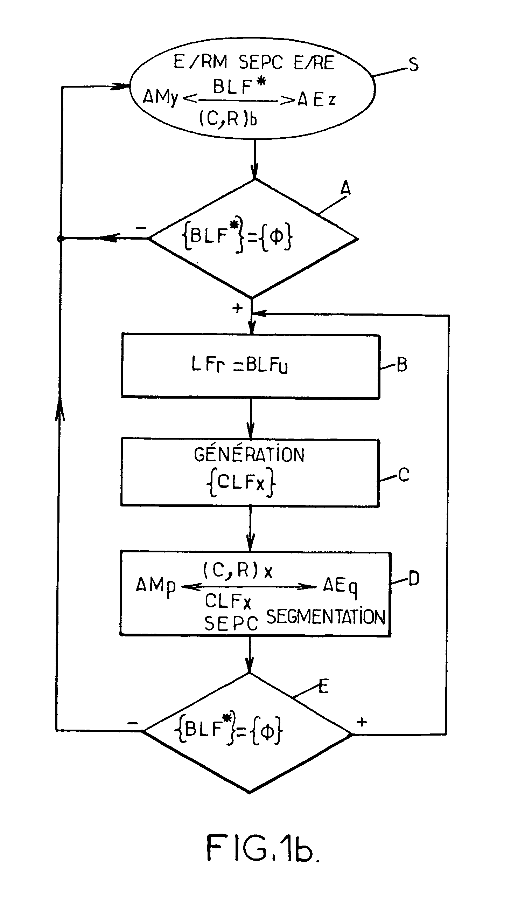

- la figure 1b représente, à titre illustratif, un organigramme de mise en oeuvre des étapes essentielles du processus selon la présente invention permettant l'exécution du processus de transmission d'une pluralité de flux logiques d'échange multiple de couples de commande/réponse sur un canal physique unique d'échange entre un émetteur/récepteur maître et un émetteur/récepteur esclave en présence d'une pluralité de flux logiques de base ;

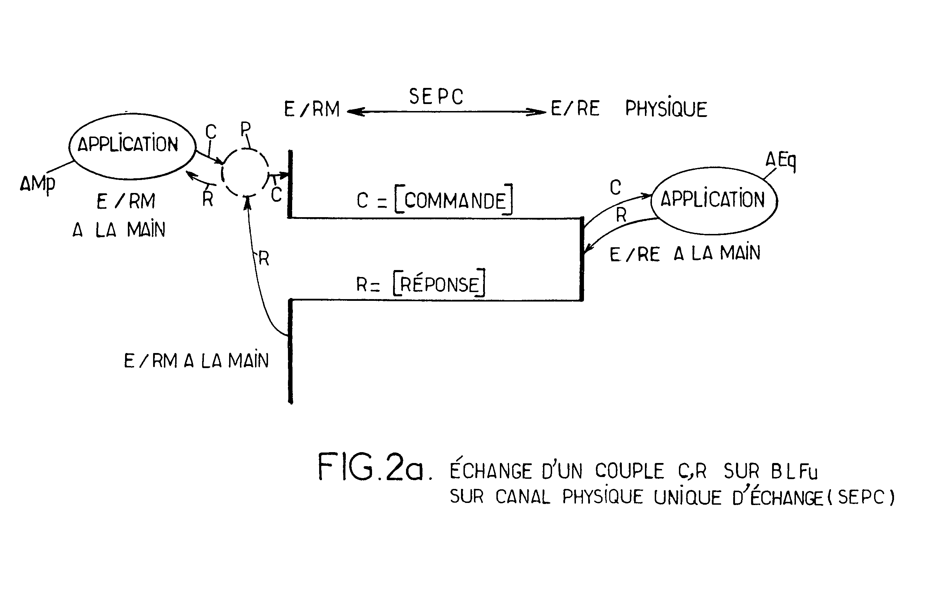

- la figure 2a représente, à titre illustratif, un mode de mise en oeuvre d'un échange sur un flux logique de base, le cas échéant pris comme flux logique de référence ;

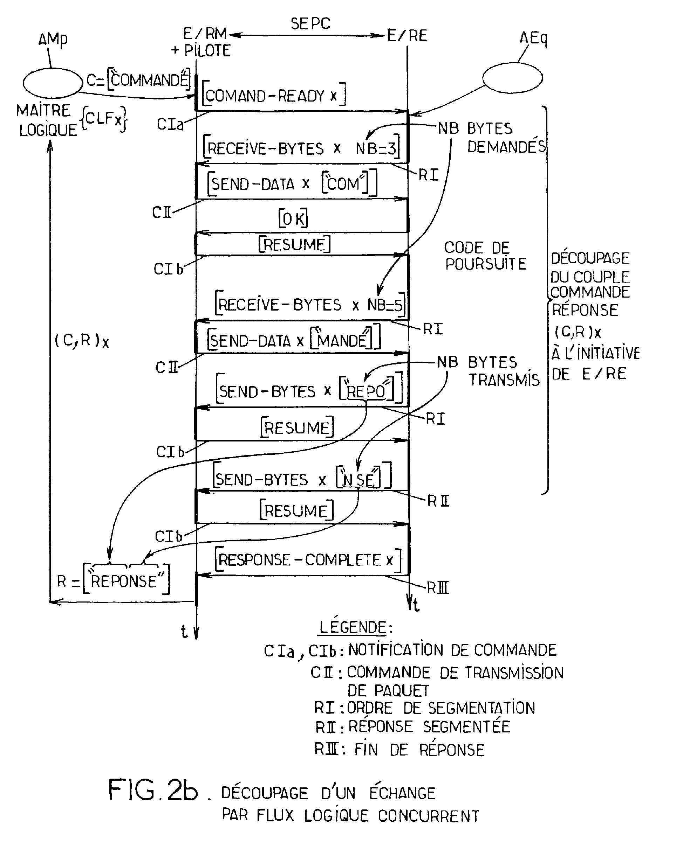

- la figure 2b représente, à titre illustratif, le processus de découpage en paquets successifs d'un échange par un flux logique concurrent à l'initiative de l'émetteur/récepteur esclave ;

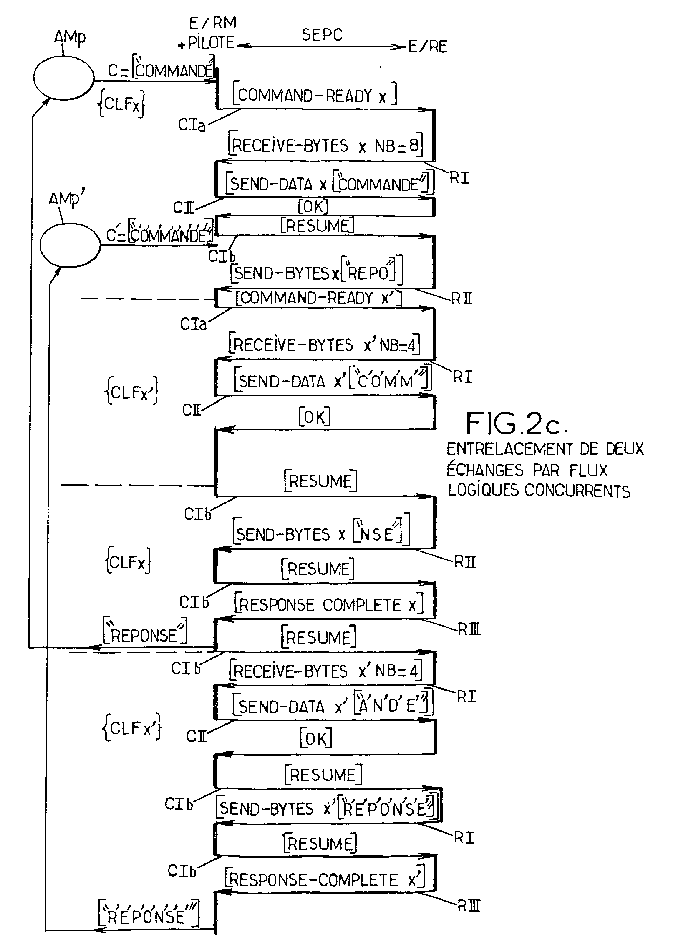

- la figure 2c représente, à titre illustratif, un entrelacement des paquets successifs de deux échanges par deux flux logiques concurrents distincts entre l'émetteur/récepteur maître et l'émetteur/récepteur esclave, le découpage en paquets successifs de chacun des flux concurrents étant effectué à l'initiative de l'émetteur/récepteur esclave de la même manière que dans le cas de la figure 2b ;

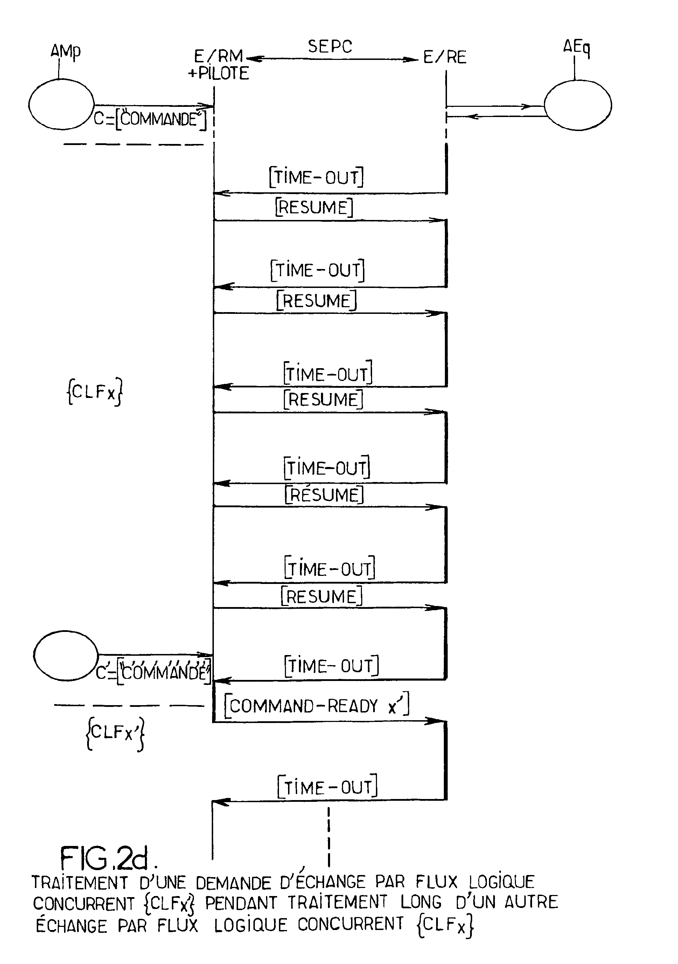

- la figure 2d représente, à titre illustratif, un processus de traitement d'un échange par flux logique concurrent pendant le processus de traitement long d'un autre échange par flux logique concurrent ;

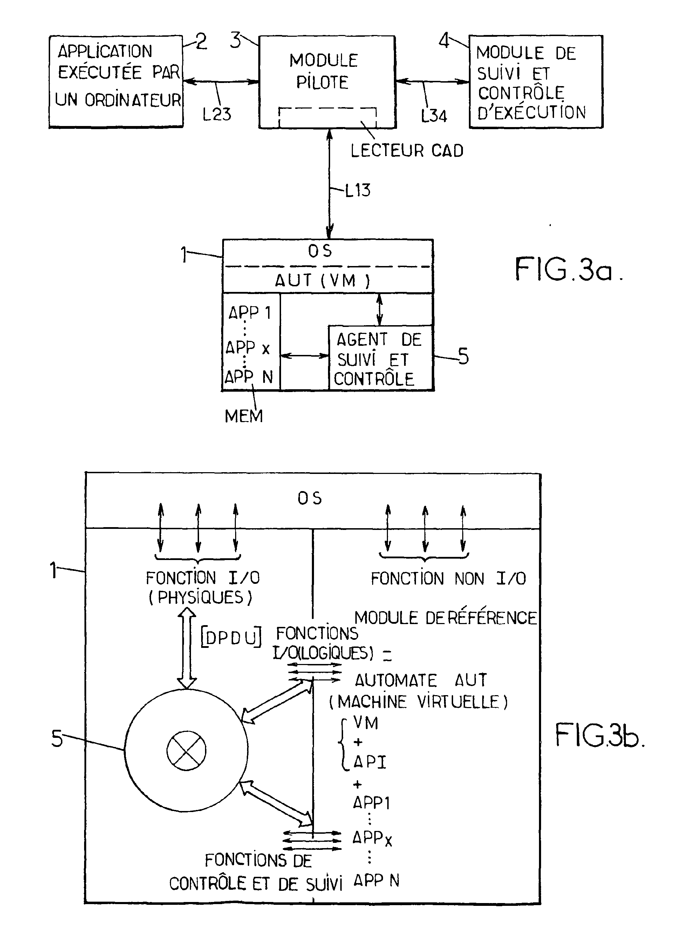

- la figure 3a représente un schéma fonctionnel d'un système informatique de suivi et de contrôle d'exécution d'appliquettes implantées sur un système informatique embarqué mettant en oeuvre le processus de transmission d'une pluralité de flux logiques d'échange multiple de couples de commande/réponse sur un canal physique unique d'échange entre un émetteur/récepteur maître et un émetteur/récepteur esclave, objet de l'invention, l'élément émetteur/récepteur maître étant constitué par un module pilote et un terminal CAD et l'élément émetteur/récepteur esclave étant constitué par ce système informatique embarqué, tel qu'une carte à puce, le canal physique unique d'échange consistant en une liaison satisfaisant à l'un des protocoles ISO 7816 ;
- la figure 3b représente, à titre illustratif, un schéma des liaison logiques entre un module agent spécifique de suivi et de contrôle d'exécution de l'automate d'exécution implanté dans le système informatique embarqué, le système d'exploitation de ce système informatique embarqué, les fonctions d'entrées/sorties (fonctions I/O logiques constituées par des APDU), les fonctions de contrôle et de suivi d'exécution de l'automate d'exécution, lorsque, dans un mode de réalisation non limitatif, l'automate d'exécution est constitué par une machine virtuelle à laquelle est associée une bibliothèque d'interfaçage d'applications (API) ;

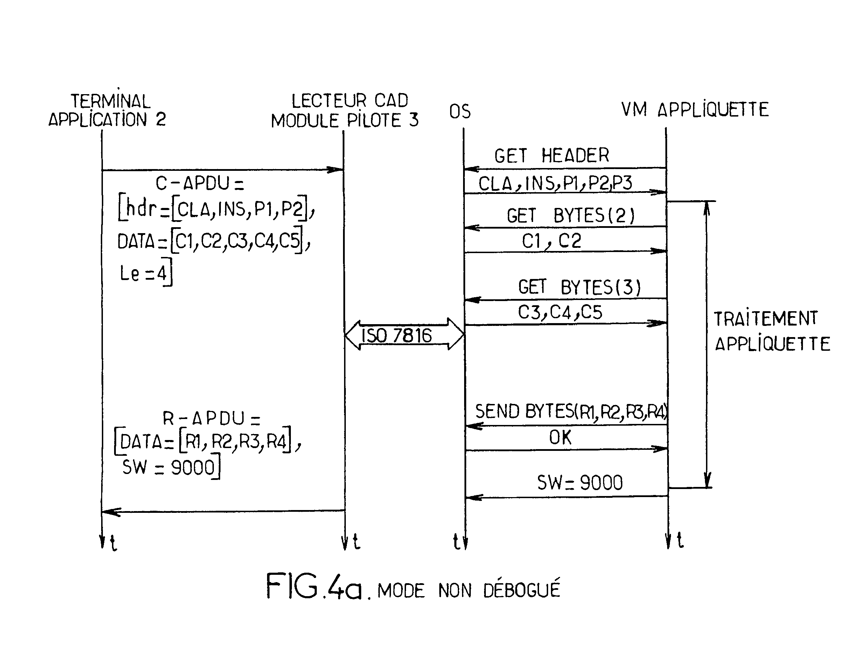

- la figure 4a représente un diagramme temporel des échanges réalisés entre les différents éléments du système informatique de suivi et de contrôle d'appliquettes, objet de l'invention, tel que représenté en figures 3a, 3b en mode non débogué, la fonction de débogage n'étant pas activée, ce système se comportant sensiblement, dans ce cas, comme un lecteur CAD associé à une carte à puce multi-applications de l'art antérieur ;

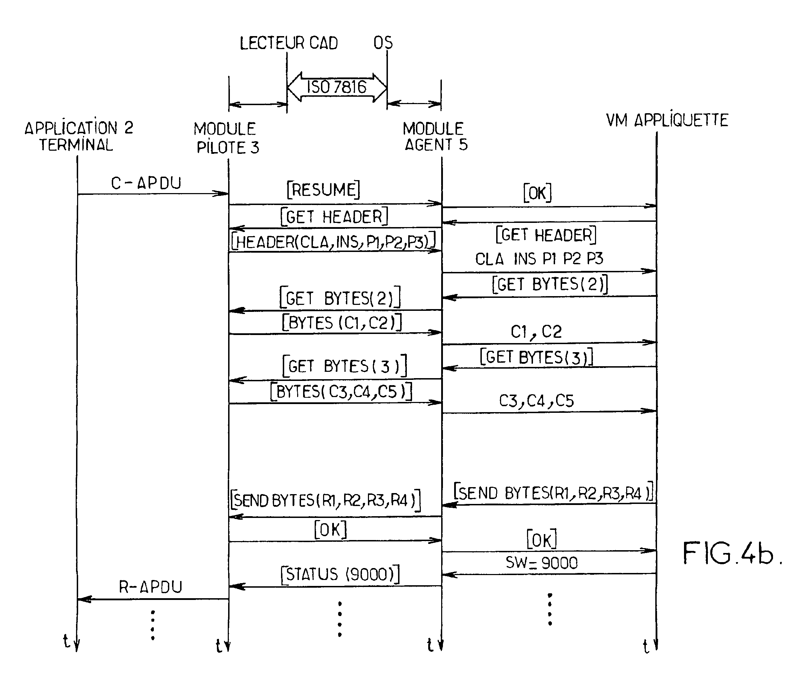

- la figure 4b représente un diagramme temporel des échanges réalisés entre les différents éléments du système informatique de suivi et de contrôle d'exécution d'appliquettes, objet de l'invention, tel que représenté en figures 3a, 3b en mode débogué, la fonction de débogage étant activée ;

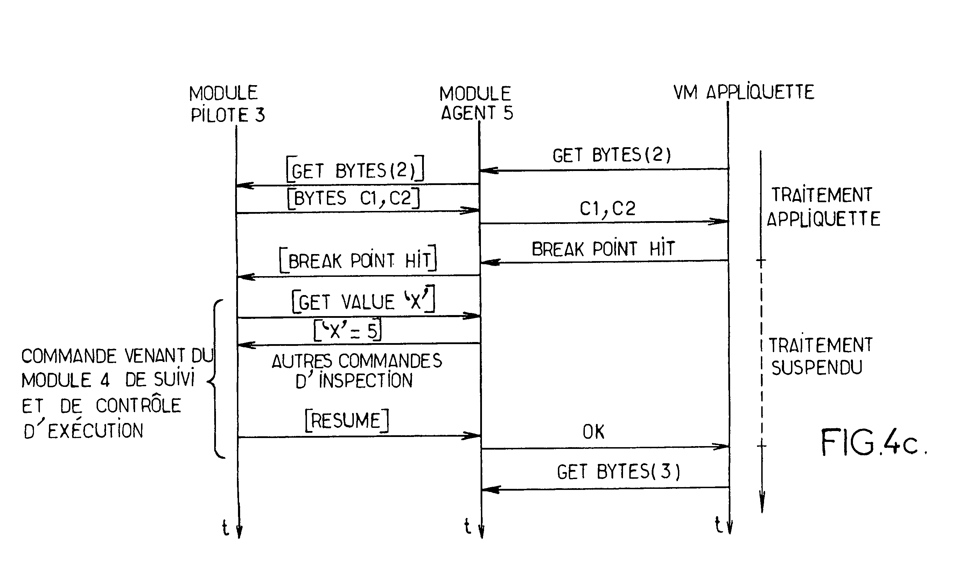

- la figure 4c représente un diagramme temporel des échanges réalisés entre les différents éléments du système informatique de suivi et de contrôle d'exécution d'appliquettes, objet de l'invention, tel que représenté en figures 3a, 3b et 4b lorsque la machine virtuelle atteint un état de point d'arrêt, encore désigné *Breakpoint hit.*

Une description plus détaillée du processus de transmission d'une pluralité de flux logiques d'échange multiple de couples de commande/réponse sur un canal physique unique d'échange, entre un émetteur/récepteur maître et un émetteur/ récepteur esclave, selon la présente invention, sera maintenant donnée avec la figure la et les figures suivantes.

Dans le cadre de la présente description, on rappelle qu'un flux logique consiste en un échange de couples de commande/réponse multiples sur un canal logique par l'intermédiaire de la liaison physique unique d'échange entre émetteur/récepteur maître et émetteur/ récepteur esclave.

D'une manière générale, on rappelle que le processus, selon la présente invention, peut être mis en oeuvre entre tout émetteur/récepteur maître et tout émetteur/récepteur esclave reliés par une liaison *half duplex* permettant l'échange de couples de commande/réponse, l'émetteur/récepteur maître étant connecté à une application parmi un ensemble d'applications et l'émetteur/récepteur esclave permettant l'exécution d'au moins une application parmi un ensemble d'applications ou de services. L'interconnexion de chaque application à l'émetteur/récepteur maître, noté E/RM, respectivement à l'émetteur/récepteur esclave, noté E/RE, ces applications étant notées respectivement $AM_y$ pour l'application interconnectée à l'émetteur/récepteur maître et $AE_z$ pour l'application connectée à l'émetteur/récepteur esclave, peut être réalisée par l'intermédiaire d'un flux logique de base, ce flux logique de base pouvant être transmis par le canal physique unique d'échange, noté SEPC, le flux logique de base BLF précité consistant en une transmission de couples de commande/réponse, notés $(C,R)_b$ sur le canal physique unique d'échange SEPC.

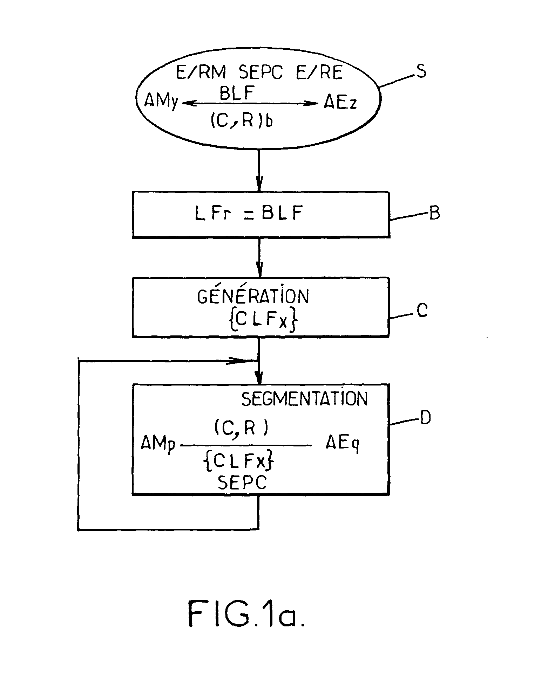

Dans ces conditions, on considère une situation de départ, notée S, telle que représentée en figure 1a, dans laquelle l'ensemble des paramètres précités a été défini et peut correspondre de manière non limitative à celle où l'émetteur/récepteur maître E/RM est constitué par un lecteur CAD permettant l'exécution d'au moins une application et où l'émetteur/récepteur esclave E/RE est constitué par une carte à puce dans laquelle des appliquettes ou services sont implantés, les flux logiques de base correspondant aux flux logiques définis par les dispositions de la norme ISO 7816-3 et 7816-4 dans cette situation.

Toutefois et conformément à une première utilisation conforme aux dispositions de la norme précitée, un seul flux de base est considéré comme ouvert et actif dans le cadre de la mise en oeuvre du processus selon l'invention représenté en figure 1a.

D'une manière plus spécifique, ainsi que représenté en figure 1a, le processus selon la présente invention, consiste à qualifier le flux logique de base actif présent BLF, comme flux logique de référence $LF_r$. Cette opération est réalisée à l'étape B de la figure 1a et illustrée par la relation :

$$LF_r = BLF.$$

Cette étape peut être effectuée par attribution aux paramètres ou codes de classes du flux logique de base actif présent d'une valeur spécifique, telle que par exemple la valeur hexadécimale FE ou autre.

L'étape B est alors suivie d'une étape C consistant à engendrer un ensemble de flux logiques concurrents $\{CLF_x\}$. Chaque flux logique concurrent est formé par des paquets élémentaires successifs segmentant les couples de.commande/réponse. Les paquets élémentaires successifs formant l'ensemble des flux logiques concurrents $\{CLF_x\}$ sont transmis sur le flux logique de référence $LF_r$ en assurant la segmentation à l'étape D, deux flux logiques concurrents de cet ensemble permettant la transmission indépendante et sensiblement simultanée de couples de commande/réponse distincts. La flèche de retour représentée à l'étape D illustre l'échange multiple de paquets successifs issus de la segmentation.

L'initiation et la poursuite de tout échange de couples de commande/réponse est réalisée à l'initiative de l'émetteur/récepteur maître à partir de commandes spécifiques transmises sur le flux logique de référence et la segmentation en paquets élémentaires successifs est réalisée à l'initiative de l'émetteur/récepteur esclave à partir de réponses spécifiques transmises en réponse à ces commandes spécifiques sur ce flux de référence. L'émetteur/récepteur maître peut ainsi maintenir, soit l'échange de couples de commande/réponse distincts, par maintien du flux logique de référence $LF_r$ pour l'exécution d'un échange entre appliquettes distinctes et application, soit l'échange de couples de commande/réponse par retour au flux logique de base, par retrait de la valeur FE.

Ce mode opératoire permet l'échange de couples de commande/réponse indépendants et sensiblement simultanés entre au moins un couple d'applications de l'émetteur/récepteur maître, respectivement esclave, ainsi qu'il sera décrit de manière plus détaillée ultérieurement dans la description. En ce qui concerne la notion de transmission sensiblement simultanée de couples de commande/réponse distincts, on comprend bien entendu que la notion de simultanéité est définie à la durée de transmission de paquets successifs près.

En outre, le processus selon la présente invention peut être mis en oeuvre en présence d'une pluralité de flux logiques de base actifs. Ainsi que représenté en figure 1b, dans cette situation, lors de la présence de tout flux logique de base initié par l'émetteur/récepteur maître E/RM, cette situation correspondant à une situation de départ S semblable à celle de la figure 1a, le processus selon la présente invention peut consister à assurer la transmission de tout flux logique de base ouvert, et normalement actif, entre l'émetteur/récepteur maître et l'émetteur/récepteur esclave. Cette opération peut être réalisée par une étape de test A consistant à vérifier l'existence d'un flux de base BLF* actif initialisé à l'initiative de l'émetteur/récepteur maître, sur requête de toute application $AM_y$ connectée ou susceptible d'être connectée à l'émetteur/récepteur maître.

Sur la figure 1b, le test A correspondant est noté :

$$BLF^* = \{\Phi\}$$

Ce test consiste à vérifier l'absence de flux logique de base actif.

Sur réponse négative au test A précité, un flux de base actif étant présent au niveau de l'émetteur/récepteur maître, le processus selon l'invention consiste à exécuter la transmission du flux logique de base actif précité par retour à l'étape S.

Au contraire, sur réponse positive au test A précité, aucun flux de base actif n'étant présent au niveau de l'émetteur/récepteur maître, le processus selon la présente invention peut alors consister à engendrer, dans au moins un flux de base pris comme flux logique de référence, un ensemble de flux logiques concurrents.

Sur la figure 1b, l'étape B, semblable à celle de la figure 1a, représente la définition d'un flux logique de base $BLF_u$ comme flux logique de référence, noté $LF_r$ par la relation :

$$LF_r = BLF_u$$

Dans le cadre de la mise en oeuvre du processus, selon la présente invention, selon un processus compatible avec les dispositions de la norme ISO 7816-4, la définition du flux logique de référence à l'étape B peut avantageusement être effectuée par l'attribution aux paramètres ou codes de classe du flux logique de base considéré, de la valeur spécifique, telle que par exemple la valeur hexadécimale FE ou autre précédemment mentionnée.

Suite à l'étape B, un ensemble de flux logiques concurrents est engendré à l'étape C, semblable à celle de la figure 1a, chaque flux logique concurrent, noté $CLF_x$, et l'ensemble de ces flux logiques concurrents, noté $\{CLF_x\}$, est formé par des paquets élémentaires successifs de données, ainsi qu'il sera décrit ultérieurement dans la description. Les flux logiques concurrents de l'ensemble de flux logiques concurrents précité $\{CLF_x\}$ permettent la transmission indépendante et sensiblement simultanée de couples de commande/réponse distincts entre applications connectées à l'émetteur/récepteur maître, applications notées $AM_p$, respectivement à l'émetteur/récepteur esclave, applications notées $AE_q$, ces applications pouvant être a priori différentes ou non des applications $AM_y$, respectivement $AE_z$, pour lesquelles un échange de données a été auparavant effectué au moyen d'un flux logique de base parmi l'ensemble BLF*.

Sur la figure 1b, l'étape de transmission indépendante et sensiblement simultanée de couples de commande/réponse distincts est notée D, ces couples de commande/réponse étant notés $(C,R)_x$ et transmis selon le flux logique concurrent correspondant $CLF_x$ sur le canal physique unique d'échange SEPC.

En outre, ainsi que représenté en figure 1b, le processus, selon la présente invention, consiste à suspendre l'échange de tout flux logique concurrent dès l'activation par l'émetteur/récepteur maître E/RM pour exécution de l'échange de couples de commande/réponse sur un flux logique de base distinct du flux logique de référence sur le canal physique unique d'échange. Cette opération de suspension peut correspondre à une étape de test E telle que représentée sur la figure 1b, cette étape de test E pouvant correspondre au même test de vérification de l'absence de flux logique de base actif BLF*, tel que réalisé à l'étape A.

Sur réponse négative à l'étape de test E, un flux logique de base actif initié par l'émetteur/récepteur maître E/RM étant présent, un retour à l'étape de départ S est réalisé pour exécution de la transmission de ce flux logique de base actif.

Au contraire, sur réponse positive au test E, un retour est réalisé à l'étape B, pour redéfinition d'un flux logique de référence et, bien entendu, exécution du processus d'échange multiple conformément aux étapes B, C et D précédemment décrites.

On comprend ainsi que, grâce à la mise en oeuvre des étapes successives du processus selon la présente invention, tel que représenté en figure 1b, celui-ci permet de poursuivre l'échange de tout flux logique concurrent dès la fin de l'exécution de l'échange de tout flux logique de base.

Ce mode opératoire permet l'échange de couples de commande/réponse indépendants et sensiblement simultanés entre au moins un couple d'applications de l'émetteur/récepteur maître, respectivement esclave sur le canal physique unique d'échange.

Le processus, selon la présente invention, tel que représenté en figure 1b, permet d'assurer une cohabitation sans conflit, des canaux logiques concurrents permettant la transmission des flux logiques concurrents et des canaux logiques de base permettant la transmission des flux logiques de base. Il permet en particulier, d'une part, l'échange de couples de commande/réponse indépendants et simultanés, ainsi que mentionné précédemment, entre au moins un couple d'applications de l'émetteur/récepteur maître, respectivement esclave, et, d'autre part, l'échange de couples de commande/réponse prioritaires sur les flux logiques de base sur le canal physique unique d'échange.

On comprend ainsi que, lorsque, ainsi qu'il sera décrit ci-après, les flux logiques de base sont définis de manière à satisfaire aux dispositions de la norme ISO 7816-4 et que l'émetteur/récepteur maître est constitué par un lecteur CAD, alors que l'émetteur/récepteur esclave est constitué par une carte à puce, à tout moment, le lecteur CAD est en mesure d'initier un échange de commandes APDU sur un canal logique de base. Pendant la durée de cet échange, les autres canaux, concurrents ou non, sont alors suspendus sans toutefois que les échanges en cours sur les canaux concurrents soient interrompus.

Dans la mise en oeuvre spécifique précitée, il est alors avantageux d'utiliser les canaux et flux logiques de base pour assurer la transmission des couples de commande/réponse dont le traitement ne nécessite qu'un temps relativement court.

Une description plus détaillée d'une mise en oeuvre spécifique des étapes B, C et D du processus, selon la présente invention, telles que précédemment décrites en liaison avec les figures 1a, 1b, sera maintenant donnée en référence aux figures 2a, 2b, 2c et 2d lorsque, en particulier, les flux logiques de base précités $BLF_u$ satisfont aux dispositions de la norme ISO 7816-4.

Sur la figure 2a, on a représenté un émetteur/récepteur maître et un émetteur/récepteur esclave, lesquels seront désignés élément E/RM, respectivement élément E/RE.

L'échange d'un couple commande/réponse, noté (C,R), sur un flux logique de base $BLF_u$, est effectué sur le canal physique unique d'échange SEPC, l'élément E/RM recevant une commande C de l'application $AM_p$ connectée à l'élément E/RM, par l'intermédiaire du pilote P, cet élément prenant la main pour assurer la transmission de la commande C, notée C=["COMMANDE"], à l'élément esclave E/RE. L'élément E/RE disposant de la main, transmet la commande C à l'application $AE_q$ connectée à l'élément esclave E/RE. La réponse de l'application précitée R est communiquée à l'élément esclave E/RE, lequel dispose à nouveau de la main pour assurer la transmission de la réponse, notée R= ["REPONSE"], sur le canal physique unique d'échange SEPC à l'élément E/RM, lequel la transmet à l'application $AM_p$ par l'intermédiaire du pilote P. Dans l'exemple donné, on comprend que les chaînes de caractères "COMMANDE" et "REPONSE" désignent une commande et une réponse symboliques respectivement.

Lorsque le flux logique considéré est un flux logique de base $BLF_u$, le processus commande/réponse peut être poursuivi par l'exécution des commandes et des réponses correspondantes, en l'absence d'imbrication ou d'entrelacement des flux logiques correspondants successifs, conformément aux dispositions de la norme ISO 7816-4.

Au contraire, lorsque le flux logique de base est constitué en flux logique de référence $LF_r$, par attribution du code de classe spécifique précédemment mentionné dans la description par exemple, le processus de génération des flux logiques concurrents successifs est alors réalisé à l'initiative de l'élément esclave E/RE par un découpage des données constituant un échange d'APDU sur le canal logique concurrent considéré. Ce découpage consiste en un découpage en unités ou segments de données plus élémentaires et en la transmission de ces segments de données ou de commandes sur le canal physique unique d'échange SEPC en utilisant toutefois des APDU standard.

On comprend en particulier que le découpage précité à l'initiative de l'élément esclave E/RE peut avantageusement être effectué conformément à un aspect particulièrement remarquable du processus, selon la présente invention, par la définition, à l'initiative de l'élément E/RE au moyen d'une réponse, d'un ordre de segmentation. Cet ordre de segmentation peut par exemple définir la taille maximale du paquet de la commande transmis par l'élément maître E/RM à titre de donnée ou de commande partielle. L'élément esclave E/RE définit de sa propre initiative ou sur requête de l'application AEq la taille maximale du paquet transmis à titre de commande partielle envoyée par l'élément maître E/RM précité. Réciproquement, l'élément esclave définit la taille effective du paquet transmis à titre de réponse partielle. On comprend en particulier que le découpage des données précitées en paquets ou segments de données permet d'entrelacer ces APDU partielles et d'entrelacer ainsi les flux logiques de données, flux logiques concurrents circulant sur les flux logiques concurrents et les canaux concurrents précités.

Un exemple de segmentation ou de découpage en paquets successifs d'une commande, respectivement d'une réponse constituant un couple commande/réponse échangé entre une application AMp connectée à l'élément maître E/RM et une application $AE_q$ connectée à l'élément esclave E/RE par l'intermédiaire d'un flux logique concurrent $CLF_x$ sera donné, à titre d'exemple non limitatif, en liaison avec la figure 2b.

Sur la figure précitée, on indique que les couples de commande/réponse utilisés correspondent bien entendu, dans le mode de réalisation non limitatif précité, à des commandes APDU.

Ainsi, l'application $AM_p$ transmet à l'élément maître E/RM une commande C, notée :

$$C=[\text{"COMMANDE"}]$$

Dans la commande précitée, constituant une C-APDU, la chaîne de caractères "COMMANDE" représentant une commande symbolique désigne une commande quelconque, normalement disponible au titre de commande APDU. La valeur logique de cette commande est celle qui est normalement disponible dans le jeu des commandes APDU, la chaîne de caractères précitée symbolisant simplement la syntaxe de cette commande.

Sur réception de la commande C précitée par l'élément maître E/RM, ce dernier disposant de la main, transmet à l'élément esclave E/RE une commande spécifique de notification de commande à l'élément esclave E/RE.

La commande de notification de commande est notée :

$$[\text{COMMAND\_READY x}]$$

où x désigne l'indice de $CLF_x$.

Sur réception de la notification de commande précitée, l'élément esclave E/RE, en liaison avec l'application $AE_q$ et disposant de la main, transmet une réponse constituant un ordre de segmentation de la commande à recevoir, la commande C précédemment citée.

L'ordre de segmentation est une réponse de type APDU de la forme :

$$[\text{RECEIVE\_BYTES x NB=3}]$$

La réponse, ordre de segmentation précitée, comprend bien entendu, outre l'en-tête fonctionnelle RECEIVE_ BYTES, un champ relatif au flux concurrent d'indice x et un champ, désigné arbitrairement sur la figure 2b par NB=3 où NB désigne le nombre maximum de *bytes* ou mots (caractères) demandé par l'élément esclave E/RE en liaison avec l'application AEq connectée à ce dernier.

Sur réception par l'élément maître E/RM de l'ordre de segmentation, l'élément maître E/RM disposant à nouveau de la main, transmet sur le flux logique de référence $LF_r$ une commande de transmission de données comportant bien entendu le nombre de *bytes* ou mots demandé par l'élément esclave E/RE ou un nombre inférieur.

La commande de transmission de paquets est une commande APDU de la forme :

$$[\text{SEND\_DATA x [\text{"COM"}]}]$$

Outre l'en-tête fonctionnelle *SEND-DATA* correspondant à une commande de transmission de données et le champ relatif au flux logique concurrent d'indice x, cette commande de transmission de paquets comporte bien entendu un nombre de *bytes,* ou mots, égal à trois et correspondant, dans le cas de la commande C, aux trois premières lettres COM de la commande arbitraire "COMMANDE".

Suite à la réception par l'élément esclave E/RE de la commande de transmission de paquets précitée, l'élément esclave disposant de la main transmet à l'élément maître une réponse d'accusé de réception de type APDU et désignée sur la figure 2b par [OK].

L'élément maître E/RM disposant à nouveau de la main, transmet alors à l'élément esclave E/RE une commande de poursuite de transmission de l'échange de couple commande/réponse de la forme :

$$[\text{RESUME}]$$

Sur réception de cette commande de poursuite, l'élément esclave E/RE disposant de la main, réitère, après traitement par l'application $AE_q$, l'envoi à l'élément maître de la réponse ordre de segmentation dans laquelle, par exemple, le champ relatif au nombre de *bytes* demandé est pris égal à NB=5.

Suite à la réception par l'élément maître E/RM de la nouvelle commande de segmentation précitée, ce dernier transmet une nouvelle commande de transmission de paquet dans laquelle le champ du paquet transmis comporte 5 *bytes* correspondant aux lettres "MANDE" de la commande C précitée.

Suite à la réception du nouveau paquet de 5 *bytes* précité, l'élément esclave E/RE est alors prêt, en liaison bien entendu avec l'application AEq et disposant de la main, à transmettre une réponse segmentée de type APDU et de la forme :

```
[SEND_BYTES x ["REPO"]]
```

La réponse précitée comprend un nombre de *bytes* ou mots transmis dont le choix est à l'initiative unique de l'élément esclave E/RE, en liaison avec l'application AEq connectée à ce dernier. Dans le cas de la figure 2b, la réponse segmentée comprend quatre *bytes,* ou mots, c'est-à-dire quatre lettres "REPO" correspondant au premier segment d'une réponse symbolique, "REPONSE".

Suite à la réception par l'élément maître E/RM de la réponse segmentée précitée, ce dernier, disposant de la main, transmet alors à l'élément esclave E/RE une nouvelle commande de poursuite, ce qui permet à l'élément esclave E/RE, en liaison avec l'application AEq et disposant de la main, d'envoyer vers l'élément maître E/RM une nouvelle réponse segmentée comportant un nombre NB de *bytes* ou mots transmis pris arbitrairement égal à trois et correspondant à "NSE".

Sur réception de cette nouvelle réponse segmentée, l'élément maître E/RM transmet en fait à l'élément esclave E/RE une commande de poursuite afin de permettre la transmission intégrale de la réponse jusqu'à ce qu'un message de type APDU de fin de réponse soit transmis par l'élément esclave E/RE à l'élément maître E/RM.

Le message APDU de fin de réponse est de la forme :

```
[RESPONSE_COMPLETE x]
```

Suite à la réception du message de fin de réponse, l'élément maître E/RM dispose de la réponse R complète de la forme :

```
R=["REPONSE"]
```

et correspondant donc à la réponse symbolique, le couple commande/réponse C/R ayant été transmis par l'intermédiaire du flux logique concurrent $CLF_x$, sur le canal physique unique d'échange SEPC, par paquets successifs à l'initiative de l'élément esclave E/RE.

La segmentation en paquets des commandes et réponses transmises par les flux logiques concurrents est ainsi réalisée sous le contrôle de l'élément esclave, c'est-à-dire la carte à puce elle-même, en liaison avec le destinataire des données transmises, c'est-à-dire les appliquettes par exemple. Ce mode opératoire apparaît extrêmement important dans la mesure où il permet d'utiliser tous les protocoles de transport-définis par la norme ISO 7816-4, en particulier pour la valeur du paramètre de transport T=0, pour lequel la forme exacte de l'APDU, notamment sa direction, est ambiguë et constitue un élément d'information implicite connu seulement des deux parties communiquant sur le canal physique unique d'échange, c'est-à-dire, en fin de compte, des applications $AM_p$ et $AE_q$.

En outre, le processus de segmentation précité, dans lequel l'élément esclave E/RE rend régulièrement la main à l'élément maître, le lecteur CAD, permet de gérer toute demande asynchrone d'échange provenant des applications $AM_p$ ou $AE_q$ connectées sur les différents canaux concurrents.

En ce qui concerne le processus de segmentation précité, et bien entendu de mise en oeuvre du processus, selon l'invention, tel que représenté en figure 1, on indique que les applications AMp et AEq peuvent requérir l'ouverture d'un canal concurrent pour transmission d'un flux logique concurrent ou d'un canal de base pour la transmission d'un flux logique de base par l'intermédiaire du pilote, non représenté au dessin, lequel consiste en une unité de calcul spécifique. Le pilote peut bien entendu communiquer avec l'élément maître E/RM et avec les applications AMp. Chaque application peut en outre, suite à l'ouverture d'un canal concurrent ou d'un canal de base pour l'échange d'un flux logique concurrent respectivement d'un flux logique de base, requérir l'échange d'une APDU sur ce canal et interrompre l'échange courant dans le cas où le canal est concurrent et où le flux logique échangé est un flux logique concurrent, ainsi que représenté en figure 1.

En outre, la segmentation des données ou commandes constituant un échange d'APDU sur un canal concurrent, tel que représenté en figures 1 et 2b, permet la transmission de ces segments de données ou de commandes sur le canal physique unique d'échange, tout en autorisant l'entrelacement des couples de commande/réponse, constitués par des APDU élémentaires, et, en définitive, l'entrelacement correspondant des flux de données concurrents circulant sur les canaux concurrents précités, ainsi qu'il sera décrit dans un exemple spécifique, non limitatif, en liaison avec la figure 2c.

Sur la figure 2c précitée, on considère un exemple non limitatif, dans lequel deux applications $AM_p$ et $AM_{p'}$ peuvent être connectées à l'élément maître E/RM par l'intermédiaire du pilote, alors que l'élément esclave E/RE est connecté à une seule application par exemple, laquelle, pour cette raison, n'est pas désignée comme telle sur la figure 2c.

Sur la figure précitée, l'application $AE_y$, par l'intermédiaire du pilote, non représenté, est réputée envoyer une commande C=["COMMANDE"] à l'élément maître E/RM suite à la requête d'ouverture d'un flux logique concurrent $CLF_x$.

En référence à la figure 2b, l'élément maître E/RM transmet sur le canal physique unique d'échange SEPC la commande de notification de commande précédemment mentionnée dans la description. L'élément esclave E/RE répond par la transmission d'une réponse ordre de segmentation pour laquelle NB est pris égal à 8 arbitrairement par l'appliquette ou application exécutée par l'élément esclave E/RE.

Sur réception de la réponse ordre de segmentation par l'élément maître E/RM, ce dernier transmet à l'élément esclave E/RE une commande de transmission de paquets comportant une chaîne de caractères comprenant huit caractères correspondant au nombre de *bytes* ou mots requis par l'élément esclave, la commande symbolique étant ainsi transmise en totalité. L'élément esclave E/RE est alors en mesure de transmettre à l'élément maître la commande d'accusé de réception [OK]. L'élément maître peut alors poursuivre toute procédure de transmission, soit sur le canal logique concurrent par la transmission du flux logique concurrent $CLF_x$, soit sur un autre canal logique concurrent, ainsi qu'il sera décrit ci-après.

L'application $AM_{p'}$ exécutée par l'élément maître E/RM a requis l'ouverture d'un canal logique concurrent $CLF_{x'}$ préalablement à la transmission par l'intermédiaire du pilote d'une commande C', correspondant à la commande symbolique de la forme :

$$C'=["C'O'M'M'A'N'D'E'"]$$

Sur réception de la commande de poursuite envoyée par l'élément maître E/RM à l'élément esclave E/RE, ce dernier peut alors procéder à l'envoi d'une réponse segmentée correspondant à la commande C, puisque, bien entendu, l'élément esclave E/RE ne connaît pas encore l'existence de la commande C' pour laquelle, seul, le canal logique concurrent a été ouvert, le flux logique concurrent $CLF_{x'}$ correspondant n'étant pas encore actif.

A titre d'exemple non limitatif, et pour une réponse symbolique "REPONSE", la réponse segmentée transmet un paquet à titre de réponse partielle, consistant en la chaîne de caractères "REPO".

L'élément maître E/RM peut alors procéder, par l'intermédiaire du pilote, à l'activation du flux logique concurrent $CLF_{x'}$ pour initialiser un échange imbriqué par l'envoi de la commande de notification de commande relative à la commande C' précédemment mentionnée.

Sur réception de la commande de notification de commande par l'élément esclave E/RE, ce dernier disposant de la main, transmet une réponse ordre de segmentation relative à la commande C' pour un nombre de *bytes* pris arbitrairement égal à NB=4. En réponse, l'élément maître E/RM transmet une commande de transmission de paquet relative à la commande C' et comportant bien entendu 4 *bytes,* ou caractères, ces lettres constituant la chaîne de caractères "C'O'M'M'" de la commande symbolique C'.

L'élément esclave E/RE transmet en réponse l'accusé de réception.

L'élément maître E/RM disposant de la main, peut, par l'intermédiaire du pilote, notifier à l'élément esclave E/RE l'ensemble des flux logiques concurrents actuellement actifs, lorsque cet ensemble est différent de l'ensemble vide. Cette notification peut être effectuée sous forme d'une commande de poursuite, laquelle sera décrite de manière plus détaillée ultérieurement dans la description. En réponse à la commande de poursuite, l'élément esclave E/RE peut alors transmettre les trois *bytes* manquants pour assurer la transmission de la réponse symbolique "REPONSE", par la réponse segmentée comportant les *bytes,* ou mots, "NSE" sur le flux logique concurrent $CLF_x$. L'élément maître E/RM transmet ensuite sur le même canal logique concurrent une commande de poursuite à l'élément esclave E/RE, lequel peut alors adresser une commande de fin de réponse relative à la commande C. Sur réception de cette commande de fin de message, l'élément maître E/RM peut adresser la réponse symbolique à la commande C à l'application $AM_p$ par l'intermédiaire du pilote.

En outre, l'élément maître E/RM peut alors poursuivre, par l'intermédiaire du pilote, le processus d'échange multiple sur le flux logique concurrent $CLF_{x'}$ pour l'échange de couples de commande/réponse relatif à la commande C', pour laquelle la commande de fin de réponse n'a pas été encore adressée par l'élément esclave E/RE. Le flux logique concurrent $CLF_{x'}$ ouvert à l'initiative de l'application $AM_{p'}$ est à nouveau activé par le pilote et, suite à la réception de la commande de poursuite par l'élément esclave E/RE, ce dernier peut transmettre à l'élément maître E/RM une réponse ordre de segmentation pour un nombre donné maximum de *bytes* ou mots pris égal à NB=4 et relative à la commande C' initialisée par l'application $AM_{p'}$.

Sur réception de la réponse ordre de segmentation, l'élément maître E/RM peut alors transmettre une commande de transmission de paquet relative à la commande C' et comportant un paquet constitué par 4 *bytes,* les quatre derniers *bytes* ou mots constituant la chaîne de caractères "A'N'D'E'" de la commande symbolique C'.

Suite à la réception par l'élément esclave E/RE de la commande de transmission de paquet précité et à l'envoi par celui-ci d'un accusé de réception, l'élément maître transmet une commande de poursuite pour obtenir une réponse à la commande symbolique.

En réponse à cette commande de poursuite, l'élément esclave E/RE transmet l'intégralité de la réponse symbolique, réponse symbolique notée "R'E'P'O'N'S'E'" et correspondant à la réponse à la commande C' sous forme de réponse segmentée.

Suite à la réception de la réponse segmentée précitée par l'élément maître E/RM, ce dernier transmet à nouveau une commande de poursuite à l'élément esclave E/RE, lequel peut alors transmettre une commande de fin de réponse relative à la commande C' à l'élément maître E/RM. Ce dernier peut alors procéder à la transmission à l'application $AE_{y'}$ de la réponse symbolique formée par la chaîne de caractères ["R'E'P'O'N'S'E'"].

En ce qui concerne les procédures d'ouverture de canaux concurrents par l'intermédiaire du pilote, on indique que cette ouverture peut être réalisée par l'intermédiaire d'une commande APDU, de type *Manage Channel.* Confer ISO 7816-4 paragraphe 6.16.

D'une manière générale, on indique que chaque paquet élémentaire successif, formant des flux logiques concurrents, est transmis au moyen de couples de commande/réponse APDU spécifiques sur le canal physique unique d'échange.

Les couples commande/réponse d'exécution d'un flux logique de base sont constitués par les entités APDU et les couples de commande/réponse distincts sont formés de préférence par une commande APDU spécifique de type *Envelope,* et une réponse APDU courte appartenant à un sous-ensemble de réponses APDU.

A la réception des commandes C-APDU physiques spéciales de type *Envelope,* l'élément esclave E/RE effectue un traitement. Par exemple, l'élément esclave, lorsque celui-ci est constitué par une carte à puce, peut faire progresser l'exécution de certaines appliquettes installées. Il doit toutefois donner une réponse en un temps relativement court. La réponse constituant une R-APDU doit prendre l'une des formes suivantes :

1. [TIME_OUT]
La carte a simplement épuisé le temps imparti sans autre événement particulier ;
2. [GET_HEADER x]
la carte réclame l'en-tête de la C-APDU du canal concurrent x. Le pilote doit répondre par la commande physique [SEND_HEADER x CLA INS P1 P2 P3] à laquelle la carte répond par une R-APDU [OK] ;
3. [GET_BYTES x n]
la carte réclame les n octets suivants de la C-APDU du canal concurrent x. Le pilote répond par une commande physique [SEND_DATA x $a_1...a_m$] où $m \leq n$ peut être différent de n s'il s'agit du dernier segment de données entrantes. La carte accuse réception par une R-APDU [OK] ;
4. [SET_OUTGOING_LENGTH x Lr]
la carte indique au pilote la longueur de la réponse R-APDU sur le canal concurrent x.
5. [SEND_BYTES x $a_1 ...a_n$]
la carte envoie les n octets suivants de la R-APDU sur le canal concurrent x.
6. [STATUS x SW]
la carte indique le statut, c'est-à-dire les deux derniers octets, de la R-APDU sur le canal concurrent x. L'échange sur le canal x est alors terminé.

Dans tous les cas, le pilote reprend la main après cet échange.

Dans le cas où la demande de la carte constitue une erreur de processus, par exemple dans les cas 2 à 6 si aucun échange n'est en cours sur le canal x ou bien si la carte demande deux fois l'en-tête au cours d'un même échange, le pilote signale le problème à la carte par une commande [IO_ERROR x code] où la nature de l'erreur est exprimée dans le nombre code.

Un traitement spécifique d'une demande d'échange par flux logique concurrent pendant le traitement long d'un autre échange par flux logique concurrent est en outre illustré en figure 2d, relativement à deux applications $AM_p$ et

AM$_{p'}$ exécutées par l'intermédiaire de l'élément maître E/RM.

En référence à la figure 2d, on considère l'exécution de l'échange d'un couple commande/réponse sur un flux logique concurrent CLF$_x$ pour une commande C=["COMMANDE"] exécutée à l'initiative de l'application AE$_y$.

Dans un tel cas, suite à l'ouverture du flux logique concurrent CLF$_x$, ce flux logique concurrent étant rendu actif par le pilote, l'exécution des échanges peut être réalisée sous condition d'exécution en temps imparti à l'élément esclave E/RE.

Pour l'exécution de l'échange, toute exécution partielle de l'élément esclave E/RE épuisant le temps imparti à ce dernier sans autre événement particulier fait l'objet de l'envoi par l'élément esclave E/RE d'une réponse de type R-APDU de la forme :

$$[\texttt{TIME\_OUT}]\quad.$$

et de l'envoi d'une commande de poursuite par l'élément maître E/RM. Ce processus peut être continué pour le flux logique concurrent CLF$_x$ actif pour différentes tranches de temps successives utilisées par l'élément esclave E/RE.

Sur réception par l'élément maître E/RM d'une commande C' à l'initiative d'une autre application AM$_{p'}$, l'ouverture du flux logique concurrent CLF$_{x'}$, ce flux logique concurrent étant rendu actif par le pilote, permet la transmission d'une notification de commande relative à la commande C' sur le canal logique concurrent support du flux logique concurrent CLF$_{x'}$ à l'élément esclave E/RE. Le processus de transmission d'une réponse [TIME_OUT] peut alors être poursuivi pour l'exécution de la commande C' sur le flux logique concurrent CLF$_{x'}$ pour l'exécution de la transmission des commandes C, respectivement C'.

Le processus, selon la présente invention, permet le traitement des demandes asynchrones d'échange entre applications exécutées par l'intermédiaire de l'élément maître E/RM ainsi que celles des appliquettes ou services exécutés par l'intermédiaire de l'élément esclave E/RE.

En référence à la figure 1b, lorsque ces demandes concernent les flux logiques de base et les canaux logiques de base correspondants, dans ce cas, l'ensemble des canaux logiques concurrents et flux logiques concurrents est suspendu jusqu'à la réception de la réponse relative aux flux logiques de base.

Toutefois, les demandes asynchrones d'échange peuvent également concerner l'envoi d'une commande C-APDU sur un canal concurrent libre. Dans ce cas, le pilote, par l'intermédiaire de l'élément maître E/RM, envoie une commande de notification de commande pour indiquer qu'une commande de type C-APDU est disponible sur le canal logique et le flux logique concurrent CLF$_x$ considéré. La commande de notification peut, à titre d'exemple non limitatif, déclencher alors l'exécution de l'appliquette destinataire sur l'élément esclave E/RE.

Lorsque le pilote dispose de la main, par l'intermédiaire de l'élément maître E/RM, mais qu'aucune demande d'échange asynchrone ne parvient à ce dernier, alors que toutefois un échange est toujours en cours sur l'un des canaux concurrents, la poursuite de l'exécution est réalisée par l'envoi d'une commande de type C-APDU, c'est-à-dire par la commande de poursuite précédemment mentionnée dans la description.

Dans ces conditions, l'élément esclave E/RE doit rendre la main en un temps relativement court, afin de pouvoir traiter les demandes asynchrones le plus rapidement possible.

En définitive, en référence aux figures 1 et 2b, le processus, selon la présente invention, peut, de manière préférentielle, être mis en oeuvre à partir de deux commandes spécifiques, commandes de type C-APDU, et trois réponses spécifiques, de type R-APDU.

La première commande spécifique est constituée par la commande de notification de commande, permettant à l'élément maître E/RM de notifier à l'élément esclave E/RE l'existence de l'ensemble des flux logiques concurrents actuellement actifs. On comprend que dans les exemples donnés en figures 2b et 2c notamment, chaque commande de notification de commande comportait un seul flux logique concurrent actif, CLF$_x$ respectivement CLF$_{x'}$, afin de ne pas surcharger inutilement la description, mais que plusieurs flux logiques concurrents peuvent le cas échéant être actifs simultanément, la transmission sur le canal physique unique d'échange de ces flux logiques concurrents ne pouvant toutefois être exécutée que successivement. La commande de notification de commande peut en fait consister en :

■ la commande CI$_a$ formée par la commande [COMMAND_READY x] ;
■ la commande CI$_b$ formée par la commande [RESUME] ;

Les commandes CI$_a$ et CI$_b$ permettent de notifier à l'élément esclave E/RE la disponibilité de l'élément maître E/RM pour l'exécution ou la poursuite d'un échange sur un canal concurrent.

La deuxième commande spécifique, constituée par la commande de transmission de paquets, permet d'envoyer

**EP 1 356 656 B1**

de l'émetteur/récepteur maître à l'émetteur/récepteur esclave, un paquet élémentaire. Cette deuxième commande spécifique, notée $C_{II}$ est envoyée sur réception de la première réponse spécifique, notée $R_I$, constituant l'ordre de segmentation, envoyée par l'émetteur/récepteur esclave en réponse à l'une des première ou deuxième commandes spécifiques. La deuxième commande spécifique $C_{II}$ est envoyée, sur réception de la première réponse spécifique issue de l'élément esclave E/RE, à l'une des première $C_{Ia}$, $C_{Ib}$, respectivement deuxième $C_{II}$ commandes spécifiques, et permet de transmettre, de l'élément maître E/RM à l'élément esclave E/RE, un paquet élémentaire relatif à la commande actuellement active d'un des flux logiques concurrents de l'ensemble des flux logiques concurrents, désigné dans la première réponse spécifique $R_I$. Le découpage en paquets successifs de la commande actuellement active, la commande C sur la figure 2b par exemple, est réalisé à l'initiative de l'émetteur/ récepteur esclave par spécification dans la première réponse spécifique $R_I$, constituant l'ordre de segmentation de la taille maximale du paquet transmis dans la deuxième commande spécifique $C_{II}$.

La deuxième réponse spécifique $R_{II}$ constituant la réponse segmentée permet d'envoyer de l'élément esclave E/RE à l'élément maître E/RM un paquet élémentaire de la réponse sur un flux logique concurrent actuellement actif, désigné dans la deuxième réponse spécifique $R_{II}$.

Enfin, la troisième réponse spécifique $R_{III}$ consiste en une réponse simple, la réponse de fin de couple de commande/réponse spécifique adressée de l'élément esclave E/RE à l'élément maître E/RM.

Ainsi, la poursuite de l'échange de paquets successifs est réalisée à l'initiative de l'élément maître E/RM sur envoi par ce dernier de la première commande spécifique, et en particulier la commande de notification de commande $C_{Ia}$. Cette poursuite est toutefois conditionnée à l'absence de flux logique de base actif, ainsi que représenté en figure 1b.

Au contraire, l'existence d'un flux logique de base actif conditionne la transmission prioritaire de ce flux logique de base actif sur le canal physique unique d'échange par l'élément maître E/RM, ainsi que représenté en figure 1b.

L'ensemble des étapes du processus, selon l'invention, permet l'échange de couples de commande/réponse indépendants, les couples de réponses C,R, respectivement C',R', tel qu'illustré en figure 2c.

Une description plus détaillée d'un système de suivi et de contrôle d'exécution d'appliquettes implantées sur un système informatique, tel qu'un système informatique embarqué, muni d'au moins une mémoire, d'un automate d'exécution et d'un système d'exploitation, l'une au moins des appliquettes implantées étant destinée à échanger des informations spécifiques avec au moins une application exécutée par un ordinateur muni d'un autre système d'exploitation, sera maintenant donnée en liaison avec les figures 3a, 3b et les figures suivantes.

D'une manière générale, on indique que le système de suivi et de contrôle d'exécution d'appliquettes, conforme à l'objet de la présente invention, met en oeuvre le processus de transmission d'une pluralité de flux logiques d'échange multiple de couples de commande/réponse sur un canal physique unique d'échange entre un l'élément maître E/RM et un l'élément esclave E/RE précédemment décrit, pour assurer un processus de suivi et de contrôle d'exécution d'appliquettes, c'est-à-dire de débogage de ces dernières.

Ainsi que représenté sur la figure 3a précitée, le système objet de l'invention comporte au moins, outre le système informatique embarqué, constitué par exemple par une carte à puce 1, et l'application 2 exécutée par un ordinateur muni d'un système d'exploitation spécifique, un module pilote 3 de suivi et de contrôle d'exécution, c'est-à-dire de débogage, de toute appliquette implantée sur le système informatique embarqué 1. Le module pilote 3 est d'une part, relié à l'application 2 par une liaison notée $L_{23}$ et, d'autre part, par l'intermédiaire d'une liaison physique unique d'échange, de type commande/réponse, liaison notée $L_{13}$ au système informatique embarqué 1.

Le système de suivi et de contrôle d'exécution, objet de l'invention, comporte également un module 4 de suivi et de contrôle d'exécution interconnecté au module pilote 3 par l'intermédiaire d'une liaison $L_{34}$, ce module de suivi et de contrôle d'exécution étant destiné à contrôler l'exécution de l'automate d'exécution du système informatique embarqué 1.

D'une manière plus spécifique, on indique que le système informatique embarqué 1 comporte un système d'exploitation OS, un automate d'exécution, noté AUT, lequel, dans un mode de réalisation spécifique en environnement JAVACARD, peut être constitué par une machine virtuelle VM de type JCVM par exemple.

Bien entendu, le système informatique embarqué 1 comprend, implantées dans une mémoire non volatile, des appliquettes distinctes, notées $App_1$...$App_x$..$App_N$, ces appliquettes étant a priori indépendantes.

Enfin, le système informatique embarqué 1 comprend un module agent de suivi et de contrôle d'exécution de l'automate d'exécution implanté en mémoire non volatile du système informatique embarqué 1.

Dans un mode de réalisation particulièrement avantageux non limitatif, on indique que le système informatique embarqué 1 est un système embarqué constitué par une carte à puce, ou carte à microprocesseur, le module pilote 3 comportant un lecteur CAD à microprocesseur et la liaison physique unique d'échange, de type commande/réponse, constituée par la liaison $L_{13}$, est constitué par une liaison de type ISO 7816.

D'une manière plus spécifique, on indique que la liaison physique unique d'échange de type commande/ réponse, permet d'effectuer des échanges multiples, conformément au processus selon la présente invention, précédemment décrit dans la description.

En ce qui concerne les liaisons $L_{23}$ et $L_{34}$, on indique que la liaison $L_{23}$ peut être réalisée par une liaison de type ISO 7816 ou par une couche logicielle compatible avec les bibliothèques logicielles PC/SC, ou OCF par exemple. Les bibliothèques logicielles PS/SC font l'objet des documents de référence Interoperability Specification for ICCs and Personal Computer Systems, version 1.0, Décembre 1997, parties 1 à 8 publiées par PC/SC Workgroup et accessibles à l'adresse [www.pcsworkgroup.com], et les bibliothèques logicielles OCF (*Open Card Framework*) d'un document de référence *OpenCard Framework 1.1.1 ... Programmer's Guide, 3rd Edition, April* 1999, publié par *OpenCard Consortium* et disponible à l'adresse [www.opencard.org]. Toutefois, dans le cas de la mise en oeuvre de la liaison $L_{34}$, cette liaison peut avantageusement être réalisée au moyen du protocole JDWP spécifié par SUN MICROSYSTEMS INC. dans le document *JAVA™ Debug Wire Protocol* accessible à l'adresse [http://java.sun.com/products/jpda/doc/jdwp-spec.html] et livré avec le *logiciel"Java2SDK,v 1.3.0"* par SUN. La mise en oeuvre d'un tel protocole permet d'utiliser tout outil de suivi et de contrôle d'exécution adapté à ce protocole.

En outre, ainsi que représenté en figure 3b, l'automate d'exécution AUT peut comprendre une machine virtuelle, notée VM, à laquelle est associée une bibliothèque d'interfaçage d'application API.

Enfin, le module agent 5, implanté dans la mémoire non volatile du système informatique embarqué, comporte un module agent logiciel de suivi et de contrôle d'exécution de l'échange entre applications et appliquettes.

Le fonctionnement général de l'ensemble est le suivant : le module pilote 3 utilise deux canaux logiques concurrents pour assurer l'échange de flux logiques concurrents correspondants implicitement ouverts. Un premier flux logique concurrent est utilisé pour communiquer avec l'une des appliquettes $App_x$ par exemple, en mode de suivi et de contrôle d'exécution désigné mode débogué.

Le deuxième flux logique concurrent est utilisé pour transmettre les événements en provenance de la machine virtuelle VM lorsque, par exemple, cette machine virtuelle atteint un point d'arrêt ou qu'elle exécute toute opération que le module de suivi et de contrôle d'exécution 4 a demandé de contrôler ou de tracer.

Enfin, un canal logique non concurrent, permettant l'échange d'un flux logique non concurrent par défaut, est alors utilisé pour contrôler l'exécution de la machine virtuelle VM et accéder à l'état interne de cette dernière.

Le module pilote 3 prend en compte la reprise de main successive de l'élément maître E/RM pour traiter les demandes d'arrêt asynchrones transmises par le module 4 de suivi et de contrôle d'exécution. Si une telle demande d'arrêt asynchrone est parvenue au module pilote et que ce dernier a repris la main, ainsi que représenté de manière schématique lors de la mise en oeuvre du processus, selon la présente invention, en relation avec les figures 2b ou 2c, alors l'exécution de la machine virtuelle VM est suspendue. L'élément maître E/RM ne transmet alors la commande de poursuite par l'intermédiaire du module pilote 3 qu'au moment où l'utilisateur, c'est-à-dire le module de suivi et de contrôle d'exécution 4 commandé par ce dernier, demande à continuer l'exécution.

La mise en oeuvre concrète du système de suivi et de contrôle d'exécution, objet de la présente invention, peut permettre d'optimiser le format des commandes et réponses APDU effectivement utilisées. Par exemple, pour opérer l'exécution d'une instruction, il faut en principe d'abord utiliser une commande de contrôle sur le canal de base permettant d'acheminer le flux logique de base précité, pour indiquer au système informatique embarqué 1 la prochaine exécution proprement dite par la commande de poursuite [RESUME]. Ces deux commandes peuvent être remplacées par une commande unique, telle que la commande [STEP].

Le mode opératoire du module pilote 3 est alors le suivant :

- Le module pilote assure la commande de contrôle et de gestion du module agent 5 par l'intermédiaire de couples de commande/réponse spécifiques, de type APDU, et désignés dans l'application considérée au débogage, pour cette raison, DPDU, pour *Debug Protocol Data Unit.* Dans ce but, le module agent provoque l'échange des messages DPDU précités à chaque transition d'entrée/sortie I/O effectuée par l'automate, c'est-à-dire d'appel aux fonctions d'entrée/sortie par la machine virtuelle VM. Les messages DPDU comprennent des paquets de la commande ou de la réponse entre application et appliquette, ainsi que décrit précédemment dans la description en liaison avec les figures 2b ou 2c.
- Le module pilote 3 suspend en outre, sur requête du module 4 de suivi et de contrôle d'exécution, à l'initiative de l'utilisateur, l'exécution de l'automate d'exécution AUT, c'est-à-dire finalement de la machine virtuelle VM, lors des échanges d'entrée/sortie et lorsque cet automate d'exécution n'exécute aucune transition d'entrée/sortie pendant un temps déterminé choisi par l'utilisateur précité. Suite à l'exécution précédemment mentionnée, le module pilote 3 transmet des couples de commande/réponse spécifiques, messages DPDU, au module agent 5 pour contrôler l'état de l'automate d'exécution, puis provoquer la poursuite de l'exécution de l'automate d'exécution AUT précité.

Une description comparative du mode opératoire du processus de suivi et de contrôle d'exécution d'appliquettes, en l'absence de mode de débogage, c'est-à-dire pour une exécution normale sensiblement conforme à l'exécution d'une machine virtuelle de l'art antérieur, en référence à la figure 4a, respectivement en mode de débogage, grâce à la mise en oeuvre du système et du processus, objets de la présente invention, en référence aux figures 4b et 4c, sera maintenant donnée.

En référence à la figure 4a, on indique que, sur le système informatique embarqué 1, c'est-à-dire la carte à puce correspondante, les accès aux entrées/sorties I/O de la machine virtuelle VM, passent par des appels à un petit nombre de fonctions du système d'exploitation OS qui sont considérées offrir des services équivalents à la bibliothèque d'interfaçage API associée à la machine virtuelle de type JAVA CARD. Sur la carte à microprocesseur, constituant le système informatique embarqué 1, l'agent 5 de contrôle et de suivi d'exécution est installé entre le système d'exploitation OS et la machine virtuelle VM. Cette installation est représentée en figure 3b. Lorsqu'il est activé, le module agent 5 intercepte tous les appels à ces fonctions d'entrée/sortie I/O et transforme chacun de ces appels en échange de DPDU avec le module pilote 3.

Pour une exécution normale, c'est-à-dire en l'absence de mode de débogage, ainsi que représenté en figure 4a, le terminal permettant l'exécution de l'application 2 envoie par exemple une commande composée de 5 *bytes,* ou mots, de données entrantes $C_1, C_2, C_3, C_4, C_5$. L'appliquette concernée accède aux données entrantes par deux appels à la méthode *Get Bytes* permettant le transfert des mots $C_1, C_2$, puis $C_3, C_4, C_5$, puis transmet les quatre mots de réponse d'une seule opération, les mots $R_1, R_2, R_3, R_4$.

En raison de la nature *half duplex* du protocole ISO 7816, la carte à puce constituant le système informatique embarqué 1 garde la main pendant toute la durée de l'échange. Il n'est alors pas possible d'interrompre l'exécution, à moins de couper l'alimentation de la carte.

Lorsque, au contraire, l'on passe en mode de débogage, conformément à la mise en oeuvre du système de suivi et de contrôle d'appliquette, objet de la présente invention, tel que représenté aux figures 3a et 3b, le mode opératoire est le suivant, en référence à la figure 4b.

Sur la figure précitée, les commandes DPDU échangées entre le module pilote 3 et le module agent 5 sont représentées entre crochets. Le module agent 5 se comporte vis-à-vis du système d'exploitation OS comme une application normale et accède à ces commandes DPDU avec les mêmes fonctions que celles utilisées par l'appliquette quand celle-ci est exécutée en mode non-débogué. Ces fonctions ne sont autres que les fonctions *GET_BYTES* et *SEND_ BYTES* ainsi que les fonctions décrites précédemment dans la description pour la mise en oeuvre du protocole objet de la présente invention. L'intérêt de couper l'échange d'une seule commande/réponse en plusieurs commandes/réponses compatibles avec le protocole ISO 7816 est le suivant : entre deux échanges partiels successifs, le canal d'entrée/ sortie est libre pour d'autres échanges entre le module pilote 3 et l'agent 5. De tels échanges sont invisibles pour l'appliquette et, bien entendu, pour le terminal d'exécution de l'application 2. Ces échanges permettent de contrôler l'exécution de la machine virtuelle VM et d'accéder à l'état interne de cette dernière.

Lorsque la machine virtuelle VM atteint un point d'arrêt entre deux appels aux fonctions d'entrée/sortie, la carte à puce, par l'intermédiaire du module agent 5, rend la main au module pilote 3, ce qui permet au module de suivi et de contrôle d'exécution 4 d'inspecter l'état de la machine virtuelle VM par l'intermédiaire de commandes appropriées.

Sur la figure 4c, on a représenté à titre d'exemple non limitatif le module de suivi et de contrôle d'exécution 4 demandant la valeur d'une variable x. Un tel échange est complètement valide physiquement, car cet échange ne comporte que des commandes C-APDU et R-APDU bien formées. Tel ne serait pas le cas si l'on avait dû interrompre l'échange en cours entre terminal d'exécution de l'application 2 et appliquette implantée dans le système embarqué 1.

On comprend ainsi que l'inspection de l'état de la machine virtuelle VM est donc exécutée lorsque cette machine virtuelle est suspendue, à l'initiative du module 4 de suivi et de contrôle d'exécution par commande en lecture/écriture de la mémoire du système informatique 1.

Par un tel processus de suivi et de contrôle d'exécution, c'est-à-dire de débogage, il est ainsi possible de multiplexer les données qui s'échangent entre le terminal permettant l'exécution de l'application 2 et l'appliquette $App_x$, d'une part, et entre le module pilote 3 et le module agent de suivi et de contrôle 5, d'autre part.

Un tel mode opératoire permet d'obtenir:

- une absence totale d'effet sur la mise en oeuvre du système d'exploitation OS, l'ensemble module agent 5 + machine virtuelle VM se comportant comme une application comme une autre. En particulier, ce mode opératoire ne nécessite pas l'existence d'un deuxième canal physique de communication ;
- un effet limité sur la mise en oeuvre de la machine virtuelle, car il suffit de remplacer les appels à un petit nombre de fonctions du système d'exploitation OS par des appels à des fonctions équivalentes dans le module agent 5.

Enfin, le système de suivi et de contrôle d'exécution d'appliquettes et le processus, selon la présente invention, sont particulièrement bien adaptés à l'exécution d'arrêts asynchrones d'exécution de la machine virtuelle.

En effet, il est souhaitable de pouvoir arrêter à tout moment l'exécution de la machine virtuelle VM, lorsque, par exemple, l'appliquette est engagée dans un calcul long ou sans fin. Compte tenu de la nature de la liaison $L_{13}$, il n'est pas possible de donner la main au module agent 5 de suivi et de contrôle et d'attendre que ce dernier termine l'exécution ou que l'appliquette $App_x$ procède à l'exécution d'une entrée/sortie, le module agent 5 ne pouvant rendre la main que sous sa propre initiative.

La solution proposée, conformément à la mise en oeuvre du système et du processus, selon l'invention, consiste alors à disposer d'une commande qui lance l'exécution de la machine virtuelle VM pendant une durée déterminée T au bout de laquelle le module agent 5 rend la main au module pilote 3, lequel dispose alors de l'opportunité de suspendre l'exécution, ou de la reprendre, si aucune demande de suspension n'est intervenue entre temps. Ce processus d'exécution pendant une durée déterminée correspond à celui de la figure 2d entre l'élément maître E/RM, constitué par l'application 2 et par le module pilote 3, et l'élément esclave E/RE constitué par le système informatique embarqué 1, et en particulier l'agent de suivi et de contrôle 5. Le module pilote 3 peut alors reprendre l'exécution si aucune demande de suspension provenant du module de suivi et de contrôle d'exécution n'est intervenue entre temps.

Au niveau du système informatique embarqué 1, constitué par une carte à puce, la mise en oeuvre d'une telle commande d'exécution pendant un temps déterminé peut être réalisée par utilisation d'un décompteur de temps système ou un simple compteur décrémenté à chaque instruction à exécuter. La durée précise T d'exécution peut être quelconque, pourvu qu'elle soit finie, c'est-à-dire que le module agent 5 finisse par rendre la main. L'ordre de grandeur de la valeur de T de durée d'exécution détermine la réactivité du système aux demandes d'interruption. Plus la valeur de T est courte, plus le système peut interrompre l'exécution rapidement. La valeur de la durée T détermine également l'efficacité globale de l'ensemble, puisqu'il existe un échange d'APDU pour chaque exécution de durée T. La détermination de l'ordre de grandeur de la durée T peut donc être effectuée en fonction des besoins, à l'initiative de l'utilisateur.

Enfin, le système de suivi et de contrôle d'exécution d'appliquettes, objet de l'invention, permet également d'exécuter le code d'une appliquette ligne de code source par ligne de code source. D'une manière générale, la table de correspondance entre compteur de programme et numéro des lignes du code source précité ne peut pas être stockée sur le système embarqué 1, formé par la carte à puce, et il est indispensable de minimiser les échanges de contrôle.

La solution permise par le système et le protocole, objets de la présente invention, consiste à associer un intervalle de compteur de programmes pour chaque ligne de source. Cette table peut alors être calculée par le compilateur et mémorisée en dehors du système embarqué 1 dans une zone mémoire accessible par le module pilote 3. Cette zone mémoire accessible peut par exemple être située dans le module 4 de suivi et de contrôle d'exécution. Pour chaque demande d'exécution ligne à ligne, on transmet avec la commande l'intervalle correspondant à la ligne courante. Pour chaque instruction, l'exécution de la machine virtuelle VM est détournée dans un élément de code de l'agent de suivi et de contrôle 5, lequel teste alors si le compteur de programmes est bien toujours dans l'intervalle considéré. Lorsque cet intervalle est dépassé par ce dernier, c'est que l'exécution a atteint une ligne différente de la ligne courante et le module agent 5 rend la main au module pilote 3.

Il est ainsi possible de transmettre l'information importante à chaque demande d'exécution ligne à ligne sans toutefois avoir à stocker la table des lignes sur le système informatique embarqué 1.

Des conditions d'arrêt similaires faisant intervenir la taille de la pile de la machine virtuelle permettent la mise en oeuvre de manière simple d'autres types d'exécution symbolique, tels que exécution d'une ligne en sautant les appels de méthode ou sortie de la méthode courante par exemple.

## Revendications

1.  Système de suivi et de contrôle d'exécution d'appliquettes implantées sur un système informatique (1) muni au moins d'une mémoire, d'un automate d'exécution et d'un système d'exploitation, l'une au moins de ces appliquettes étant destinée à échanger des informations spécifiques avec au moins une application (2) exécutée par un ordinateur muni d'un autre système d'exploitation, **caractérisé en ce qu'**il comporte au moins :

    - des moyens pilotes (3) de suivi et de contrôle d'exécution reliés, d'une part, à ladite application (2), et ,d'autre part, audit système informatique (1) par l'intermédiaire d'une liaison physique unique d'échange (L13) de type commande/réponse;
    - des moyens (4) de suivi et de contrôle d'exécution interconnectés auxdits moyens pilotes et destinés à contrôler l'exécution dudit automate d'exécution dudit système informatique (1) ;
    - un module agent (5) de suivi et de contrôle d'exécution de l'automate d'exécution implanté dans ledit système informatique (1),

        • lesdits moyens pilotes (3) assurant la commande de contrôle et de gestion du module agent par l'intermédiaire de couples de commande/réponse spécifiques, messages DPDU, sur le canal physique unique d'échange, à chaque transition d'entrée/sortie, ledit module agent (5) provoquant l'échange de messages DPDU comprenant des paquets de la commande ou de la réponse entre applications et appliquettes ;
        • lesdits moyens pilotes (3) suspendant, sur requête des moyens (4) de suivi et de contrôle d'exécution, l'exécution de l'automate d'exécution lors des échanges d'entrée/sortie et lorsque cet automate d'exécution n'exécute aucune transition d'entrée/sortie pendant un temps déterminé, lesdits moyens pilotes (3) ayant alors récupéré la main, et, suite à la suspension de cette exécution,
        • lesdits moyens pilotes (3) transmettant des couples de commande/réponse spécifiques, messages DPDU, au module agent (5) pour accéder à l'état de l'automate d'exécution puis provoquer la poursuite de l'exécution de cet automate d'exécution au moyen d'une commande spécifique.

**2.** Système selon la revendication 1, **caractérisé en ce que** ledit système informatique (1) est un système embarqué constitué par une carte à microprocesseur, et **en ce que** lesdits moyens pilotes comportant un lecteur de carte à microprocesseur, ladite liaison physique d'échange de type commande/réponse est une liaison ISO 7816.

**3.** Système selon l'une des revendications 1 ou 2, **caractérisé en ce que** lesdits moyens (4) de contrôle d'exécution comportent au moins des moyens de commande de lecture de la mémoire dudit système informatique (1).

**4.** Système selon l'une des revendications 1 à 3, **caractérisé en ce que** lesdits moyens (4) de contrôle d'exécution comportent en outre des moyens de contrôle de l'exécution de l'automate d'exécution dudit système informatique (1).

**5.** Système selon l'une des revendications 1 à 4, **caractérisé en ce que** lesdits moyens de contrôle d'exécution (4) comportent en outre des moyens de commande d'écriture de la mémoire dudit système informatique (1).

**6.** Système selon les revendications 1, 3 et 4, **caractérisé en ce que** lesdits moyens (4) de contrôle d'exécution sont reliés auxdits moyens pilotes (3) par un protocole JDWP, ce qui permet d'utiliser tout outil de suivi et de contrôle adapté à ce protocole.

**7.** Système selon les revendications 1 et 2,
**caractérisé en ce que** ledit automate d'exécution comprend une machine virtuelle et une bibliothèque d'interfaçage d'application (API).

**Claims**

**1.** A system for tracking and checking the execution of applets installed in a computer system (1) having at least a memory, an automatic executor and an operating system, where at least one of the applets is designed for exchanging specific information with at least one application (2) executed by a computer with another operating system, **characterised in that** it comprises at least:

- driving means (3) for tracking and checking the execution that are connected on one side to the said application (2) and on the other side to the said computer system (1) by means of a single physical exchange link (L13) of the command/response type;
- means (4) for tracking and checking execution that are interconnected with the said driving means that are intended for checking the execution of the said automatic executor of the said computer system (1);
- an agent module (5) for tracking and checking the execution of the automatic executor installed in the said computer system (1),

• the said driving means (3) control the checking and management of the agent module through specific pairs of commands/responses, DPDU messages, on the single physical exchange channel, with each input/output transition, the said agent module (5) generating the exchange of DPDU messages including packets of the command or the response between applications and applets;
• the said driving means (3) suspend, when requested by the means (4) for tracking and checking execution, the execution of the automatic executor during input/output exchanges and when the automatic executor does not execute any input/output transition for a given time, the said driving means (3) then having taken control once again, and following the suspension of the execution,
• the said driving means (3) transmit the specific pairs of commands/responses, DDPU messages, to the agent module (5) to access the status of the automatic executor and then bring about the continuation of the execution of the automatic executor with a specific command.

**2.** A system according to claim 1, **characterised in that** the said computer system (1) is an embedded system made up of a microprocessor card and **in that** the said driving means having a microprocessor card reader, the said physical exchange link of the command/response type is an ISO 7816 link.

**3.** A system according to claim 1 or 2, **characterised in that** the said means (4) for checking execution comprise at least means to command the reading of the memory of the said computer system (1).

4. A system according to any of the claims 1 to 3, **characterised in that** the said means (4) for checking execution further comprise means for checking the execution of the automatic executor of the said computer system (1).

5. A system according to claims 1 to 4, **characterised in that** the said means for checking the execution (4) further comprise means for commanding writing in the memory of the said computer system (1).

6. A system according to claims 1, 3 and 4, **characterised in that** the said means (4) for checking execution are connected to the said driving means (3) by a JDWP protocol, which makes it possible to use any tool for tracking and checking suited to the protocol.

7. A system according to claims 1 and 2, **characterised in that** the said automatic executor comprises a virtual machine and an application program interface library (API).

**Patentansprüche**

1. Überwachungs- und Kontrollsystem der Ausführung von Applets, die auf einem EDV-System (1) implantiert werden, das mindestens mit einem Arbeitsspeicher, einem automatischen Ausführungssystem und einem Betriebssystem ausgestattet ist; mindestens eines dieser Applets dient dem Austausch von spezifischen Informationen mittels mindestens einer Anwendung (2), die von einem Computer mit einem anderen Betriebssystem ausgeführt wird, das sich durch folgende Eigenschaften auszeichnet:

   - Pilotgeräte (3) zur Ausführungsüberwachung und - kontrolle, die einerseits mit der genannten Anwendung (2) und andererseits mit dem genannten EDV-System (1) über eine einzige physische Verbindung für den Datenaustausch (L13) des Typs Befehl/Meldung verbunden sind;
   - Systeme (4) zur Ausführungsüberwachung und -kontrolle, die mit diesen Pilotgeräten verbunden sind und für die Kontrolle der Ausführung des genannten automatischen Ausführungssystems des genannten EDV-Systems (1) bestimmt sind;
   - Ein Agenten-Modul (5) zur Ausführungsüberwachung und - kontrolle des automatischen Ausführungssystems, das im genannten EDV-System (1) implantiert ist,

      • wobei die genannten Pilotgeräte (3) die Steuerung und die Verwaltung des Agenten-Moduls über spezifische Befehl/Meldungspaare, DPDU-Meldungen, auf dem einzigen physischen Austauschkanal, an jedem Eingabe-/Ausgabe-Übergang gewährleisten und das genannte Agenten-Modul (5) den Austausch von DPDU-Meldungen bewirkt, die Pakete des Befehls oder der Meldung zwischen den Anwendungen und Applets enthalten;
      • wobei die Pilotgeräte (3) auf Anforderung der Systeme (4) zur Ausführungsüberwachung und -kontrolle die Ausführung des automatischen Ausführungssystems beim Eingangs/Ausgangsaustausch und wenn dieses automatische Ausführungssystem während einer festgelegten Zeit keinen Eingangs-/Ausgangsübergang ausführt, unterbrechen und die genannten Pilotgeräte (3) dann nach der Unterbrechung dieser Ausführung wieder die Oberhand gewonnen haben,
      • wobei die genannten Pilotgeräte (3) spezifische Befehl/Meldungspaare, DPDU-Meldungen an das Agenten-Modul (5) übertragen, um zum Zustand des automatischen Ausführungssystems zu gelangen und um anschließend die Verfolgung der Ausführung dieses automatischen Ausführungssystems mittels einer speziellen Steuerung zu erwirken.

2. System gemäß Patentanspruch 1, das sich dadurch auszeichnet, dass das genannte EDV-System (1) ein eingebettetes System ist, das aus einer Chipkarte zusammengesetzt ist, und dass die genannten Pilotgeräte einen Chipkarten-Leser umfassen und die genannte physische Austauschverbindung vom Typ Befehl/Meldung eine Verbindung nach ISO 7816 ist.

3. System gemäß einer der Patentansprüche 1 oder 2, das sich dadurch auszeichnet, dass die benannten Systeme (4) für die Ausführungsüberwachung mindestens Steuerungen für das Lesen des Speichers des genannten EDV- Systems (1) umfassen.

4. System gemäß einer der Patentansprüche 1 bis 3, das sich dadurch auszeichnet, dass die genannten Systeme (4) für die Ausführungsüberwachung außerdem Systeme für die Überwachung der Ausführung des automatischen Ausführungssystems des genannten EDV-Systems (1) umfassen.

**5.** System gemäß einer der Patentansprüche 1 bis 4, das sich dadurch auszeichnet, dass die genannten Systeme für die für die Ausführungsüberwachung (4) außerdem Steuerungen für das Schreiben des Speichers des genannten EDV-Systems (1) umfassen.

**6.** System gemäß den Patentansprüchen 1, 3 und 4, das sich dadurch auszeichnet, dass die genannten Systeme (4) für die Ausführungsüberwachung mit den genannten Pilotgeräten (3) über ein JDWP (Java Debug Wire Protocol) verbunden sind, was die Benutzung von allen Tools zur Überwachung und Kontrolle ermöglicht, die diesem Protokoll angepasst sind.

**7.** System gemäß den Patentansprüchen 1 und 2, das sich dadurch auszeichnet, dass das genannte automatische Ausführungssystem eine virtuelle Maschine und eine Programmierschnittstelle (API) umfasst.

E/RM SEPC E/RE

$AMy \xleftarrow{\text{BLF}} \xrightarrow{\phantom{xxxx}} AEz$

$(C,R)b$

— S

$LFr = BLF$ — B

GÉNÉRATION
$\{CLFx\}$ — C

SEGMENTATION

$AMp \dfrac{(C,R)}{\{CLFx\}} AEq$ — D

SEPC

# FIG.1a.

FIG.1b.

FIG.2a. ÉCHANGE D'UN COUPLE C,R SUR BLFu
SUR CANAL PHYSIQUE UNIQUE D'ÉCHANGE(SEPC)

FIG.2b . DÉCOUPAGE D'UN ÉCHANGE
PAR FLUX LOGIQUE CONCURRENT

LÉGENDE:
CIa, CIb : NOTIFICATION DE COMMANDE
CII : COMMANDE DE TRANSMISSION DE PAQUET
RI : ORDRE DE SEGMENTATION
RII : RÉPONSE SEGMENTÉE
RIII : FIN DE RÉPONSE

FIG.2c.
ENTRELACEMENT DE DEUX
ÉCHANGES PAR FLUX
LOGIQUES CONCURRENTS

FIG.2d.

TRAITEMENT D'UNE DEMANDE D'ÉCHANGE PAR FLUX LOGIQUE
CONCURRENT {CLFx} PENDANT TRAITEMENT LONG D'UN AUTRE
ÉCHANGE PAR FLUX LOGIQUE CONCURRENT {CLFx}

APPLICATION EXÉCUTÉE PAR UN ORDINATEUR — 2

3 — MODULE PILOTE

4 — MODULE DE SUIVI ET CONTRÔLE D'EXÉCUTION

L23

L34

LECTEUR CAD

L13

1 — OS

AUT (VM)

APP 1
⋮
APP x
⋮
APP N

AGENT DE SUIVI ET CONTRÔLE — 5

MEM

FIG.3a.

OS

1

FONCTION I/O (PHYSIQUES)

FONCTION NON I/O

MODULE DE RÉFÉRENCE

[DPDU] FONCTIONS I/O(LOGIQUES) =

AUTOMATE AUT (MACHINE VIRTUELLE)

⎧ VM
⎨ +
⎩ API

+

APP1
⋮
APPx
⋮
APP N

5

FONCTIONS DE CONTRÔLE ET DE SUIVI

FIG.3b.

FIG.4a. MODE NON DÉBOGUÉ

EP 1 356 656 B1

FIG.4b.

EP 1 356 656 B1

EP 1 356 656 B1

MODULE
PILOTE 3

MODULE
AGENT 5

VM APPLIQUETTE

GET BYTES(2)

[GET BYTES(2)]

[BYTES C1,C2]

C1,C2

TRAITEMENT
APPLIQUETTE

BREAK POINT HIT

[BREAK POINT HIT]

[GET VALUE 'x']

['x' = 5]

COMMANDE VENANT DU
MODULE 4 DE SUIVI
ET DE CONTRÔLE
D'EXÉCUTION

AUTRES COMMANDES
D'INSPECTION

TRAITEMENT
SUSPENDU

[RESUME]

OK

FIG.4c.

GET BYTES(3)

t

t

t

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0992958 A

**Littérature non-brevet citée dans la description**

- Interoperability Specification for ICCs and Personal Computer Systems. PC/SC Workgroup, Décembre 1997, vol. 1-8